(19) Europäisches Patentamt
European Patent Office
Office européen des brevets

(11)     EP 3 779 922 B1

(12)     **EUROPEAN PATENT SPECIFICATION**

(45) Date of publication and mention
of the grant of the patent:
**11.09.2024   Bulletin 2024/37**

(21) Application number: **19803310.2**

(22) Date of filing: **28.04.2019**

(51) International Patent Classification (IPC):
**G08G 1/16** *(2006.01)*       **B60W 40/072** *(2012.01)*

(52) Cooperative Patent Classification (CPC):
**G08G 1/167; B60W 60/0011; G01C 21/34;**
B60W 2554/4049

(86) International application number:
**PCT/CN2019/084747**

(87) International publication number:
**WO 2019/218861 (21.11.2019 Gazette 2019/47)**

(54) **METHOD FOR ESTIMATING DRIVING ROAD AND DRIVING ROAD ESTIMATION SYSTEM**

VERFAHREN ZUR SCHÄTZUNG EINES FAHRWEGS UND FAHRWEGSCHÄTZSYSTEM

PROCÉDÉ ET SYSTÈME D'ESTIMATION DE ROUTE DE CIRCULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **14.05.2018   CN 201810458047**

(43) Date of publication of application:
**17.02.2021   Bulletin 2021/07**

(73) Proprietor: **HUAWEI TECHNOLOGIES CO., LTD.**
**Shenzhen, Guangdong 518129 (CN)**

(72) Inventors:
• **DU, Mingbo**
**Shenzhen, Guangdong 518129 (CN)**
• **HE, Liangfei**
**Shenzhen, Guangdong 518129 (CN)**
• **DU, Xingxing**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 1 668 938      CN-A- 102 209 658
CN-A- 105 667 518      CN-A- 106 355 948
US-A1- 2005 179 580      US-A1- 2010 063 735
US-A1- 2010 063 735      US-A1- 2017 327 118

**Description**

**TECHNICAL FIELD**

This application relates to the field of autonomous vehicle driving, and in particular, to a method for predicting a road occupancy map of a target moving object and a system for predicting a road occupancy map of a target moving object.

**BACKGROUND**

With the development of economy, increasing vehicles are traveling on roads, and traffic congestion phenomena are increasingly severe. As a result, driving situations on the roads become increasingly complex. In a driving process, a driver needs to pay much attention to a distance between a vehicle and another vehicle for a long time, to avoid a collision between the vehicle and the another vehicle.

To improve driving safety, the prior art provides an automatic vehicle following system. The automatic vehicle following system tracks a vehicle ahead based on vehicle-mounted radar and a vehicle-mounted camera, to control a velocity of a vehicle, so that the vehicle keeps a specific safe distance from the vehicle ahead.

However, in a road congestion scenario and a night scenario in which a traffic condition is indefinite, tracking results obtained by the vehicle-mounted radar and the vehicle-mounted camera through detection are greatly affected due to frequent flows of other vehicles, non-motor vehicles, or pedestrians, and a dramatic change in a light condition. Consequently, a tracking target is unstable or even lost in this case. As a result, it is impossible to effectively travel following the vehicle, increasing a risk of driving.

US 2010/063735 A1 provides a method, an apparatus, and a program of predicting an obstacle course, capable of appropriately predicting a course of an obstacle even under a complicated traffic environment.

**SUMMARY**

Embodiments of the present invention provide a driving road estimation method and a driving road estimation system that can improve safe driving.

A first aspect of the embodiments of the present invention provides a method for predicting a road occupancy map of a target moving object according to appended claim 1.

According to this aspect, even in a case of a severe traffic condition, such as a road congestion scenario and a night scenario in which a traffic condition is indefinite, the vehicle needs to obtain only the target status information of the target moving object at the current moment; and in a process of obtaining the target status information, the vehicle can estimate, based on the target status information, the road region in which the vehicle travels at the subsequent moment, without relying on a surrounding environment. Because the region in which the vehicle travels at the subsequent moment and the region in which the target moving object travels at the subsequent moment that are determined by the vehicle do not overlap, the vehicle can safely travel in the estimated road region. This effectively improves driving safety and reliability of the vehicle.

Based on the first aspect of the embodiments of the present invention, in an optional implementation of the embodiments of the present invention, step B specifically includes the following steps.

Step B1: The vehicle sets that the target status information satisfies a target Gaussian distribution

$$N(a_{x1}, \delta^2_{a_{x1}}).$$

An expectation of the target Gaussian distribution is the lateral acceleration $a_{x1}$, a variance of the target Gaussian distribution is $\delta^2_{a_{x1}}$, and the variance $\delta^2_{a_{x1}}$ represents a discrete degree of the target Gaussian distribution $N(a_{x1}, \delta^2_{a_{x1}})$; and the target status information satisfying the target Gaussian distribution $N(a_{x1}, \delta^2_{a_{x1}})$ is discretized into $2(k+1)$ intervals, where $k$ is a preset discretization coefficient.

Specifically, $k$ in this embodiment may be inversely proportional to resolution f of a map stored in the vehicle, that is, $k \propto 1/f$, and the resolution f of the map is measured by using meters.

Step B2: The vehicle performs sampling in a target interval to obtain a target discrete value.

The target interval is any interval included in the $2(k+1)$ intervals formed by a bell-shaped region that is obtained after the target status information is discretized.

Step B3: The vehicle obtains a target probability value corresponding to the target discrete value.

The target probability value that is corresponding to the target discrete value and that is obtained by the vehicle is equal to an area of the target interval.

Step B4: The vehicle sets the target probability value in the parameter sequence.

Specifically, the probability value obtained by the vehicle is corresponding to the target discrete value and the target discrete value.

According to this implementation, the vehicle may perform discretization processing on the lateral acceleration of the moving object in a probability discretization processing manner that is based on the Gaussian distribution, to obtain the parameter sequence including a plurality of discrete values, so as to effectively reduce calculation difficulty in estimating the parameter sequence by the vehicle, and increase a speed of calculating the target probability value. This effectively improves efficiency of estimating, by the vehicle, the road region in which the target moving object travels at the subsequent moment.

Based on the first aspect of the embodiments of the present invention, in an optional implementation of the embodiments of the present invention, a specific execution process of step B3 includes the following step.

Step B31: The vehicle determines, according to a first formula, the target probability value $P_i$ corresponding to the target discrete value.

Specifically, the target status information further includes the longitudinal acceleration $a_{y1}$ of the target moving object, and the target interval is an $i^{th}$ interval in the $2(k+1)$ intervals. In this case, when the vehicle determines that i is any integer greater than 0 and less than or equal to $k$, the vehicle determines, according to the first formula, the target probability value $P_i$ corresponding to the target discrete value, where the first formula is:

$$P_i = \int_{a_{x1}+(i-1)\times\delta_{a_{x1}}}^{a_{x1}+i\times\delta_{a_{x1}}} \frac{1}{\sqrt{2\pi}\delta_{a_{x1}}} \exp\left(-\frac{(a_x-a_{x1})^2}{2\delta_{a_{x1}}^2}\right) da_x$$

, where an integral interval of the first formula is $[a_{x1}+i\times\delta_{a_{x1}}, a_{x1}+(i-1)\times\delta_{a_{x1}}]$, an integral variable is $a_x$, an integrand is $\frac{1}{\sqrt{2\pi}\delta_{a_{x1}}}\exp\left(-\frac{(a_x-a_{x1})^2}{2\delta_{a_{x1}}^2}\right)$, and $\exp\left(-\frac{(a_x-a_{x1})^2}{2\delta_{a_{x1}}^2}\right)$ is a $\left(-\frac{(a_x-a_{x1})^2}{2\delta_{a_{x1}}^2}\right)^{th}$ power of e.

Alternatively, the specific execution process of step B3 includes step B32: The vehicle determines, according to a second formula, the target probability value $P_i$ corresponding to the target discrete value.

Specifically, if the vehicle determines that i is any integer greater than $-k$ and less than 0, the vehicle may determine, according to the second formula, the target probability value $P_i$ corresponding to the target discrete value, where the second formula is:

$$P_i = \int_{a_{x1}+i\times\delta_{a_{x1}}}^{a_{x1}+(i+1)\times\delta_{a_{x1}}} \frac{1}{\sqrt{2\pi}\delta_{a_{x1}}} \exp\left(-\frac{(a_x-a_{x1})^2}{2\delta_{a_{x1}}^2}\right) da_x$$

, where an integral interval of the second formula is $[a_{x1}+(i+1)\times\delta_{a_{x1}}, a_{x1}+i\times\delta_{a_{x1}}]$, an integral variable is $a_x$, an integrand is $\frac{1}{\sqrt{2\pi}\delta_{a_{x1}}}\exp\left(-\frac{(a_x-a_{x1})^2}{2\delta_{a_{x1}}^2}\right)$, and $\exp\left(-\frac{(a_x-a_{x1})^2}{2\delta_{a_{x1}}^2}\right)$ is a $\left(-\frac{(a_x-a_{x1})^2}{2\delta_{a_{x1}}^2}\right)^{th}$ power of e.

Alternatively, the specific execution process of step B3 includes step B33: The vehicle determines, according to a third formula, the target probability value $P_i$ corresponding to the target discrete value.

Specifically, if the vehicle determines that i is equal to $-k-1$, the vehicle may determine, according to the third formula, the target probability value $P_i$ corresponding to the target discrete value, where the third formula is:

$$P_i = \int_{a_{xmin}}^{a_{x1}-k\times\delta_{a_{x1}}} \frac{1}{\sqrt{2\pi}\delta_{a_{x1}}} \exp\left(-\frac{(a_x-a_{x1})^2}{2\delta_{a_{x1}}^2}\right) da_x$$

, where $a_{xmin} = -\sqrt{a_{max}^2 - a_{y1}^2}$, $a_{max}$ represents a maximum acceleration of the target moving object, an integral interval of the third formula is $[a_{x1}-k\times\delta_{a_{x1}}, a_{xmin}]$, an integral variable is $a_x$, an

integrand is $\frac{1}{\sqrt{2\pi}\delta_{a_{x1}}}\exp(-\frac{(a_x-a_{x1})^2}{2\delta_{a_{x1}}^2})$ , and $\exp(-\frac{(a_x-a_{x1})^2}{2\delta_{a_{x1}}^2})$ is a $(-\frac{(a_x-a_{x1})^2}{2\delta_{a_{x1}}^2})^{th}$ power of e.

Alternatively, the specific execution process of step B3 includes step B34: The vehicle determines, according to a fourth formula, the target probability value $P_i$ corresponding to the target discrete value.

If i is equal to $k$ +1, the vehicle determines, according to the fourth formula, the target probability value $P_i$ corresponding to the target discrete value, where the fourth formula is:

$$P_i = \int_{a_{x1}+k\times\delta_{a_{x1}}}^{a_{x\max}} \frac{1}{\sqrt{2\pi}\delta_{a_{x1}}}\exp(-\frac{(a_x-a_{x1})^2}{2\delta_{a_{x1}}^2})da_x \qquad a_{x\max}=\sqrt{a_{\max}^2-a_{y1}^2}$$

, where , an integral interval of the fourth formula is $[a_{x\max}, a_{x1} + k \times \delta_{a_{x1}}]$, an integral variable is $a_x$, an integrand is $\frac{1}{\sqrt{2\pi}\delta_{a_{x1}}}\exp(-\frac{(a_x-a_{x1})^2}{2\delta_{a_{x1}}^2})$ , and

$\exp(-\frac{(a_x-a_{x1})^2}{2\delta_{a_{x1}}^2})$ is a $(-\frac{(a_x-a_{x1})^2}{2\delta_{a_{x1}}^2})^{th}$ power of e .

According to this implementation, the vehicle can accurately calculate the target probability value corresponding to the target discrete value, so that based on the accurate target probability value, the vehicle can effectively improve accuracy of estimating, by the vehicle, the road region in which the target moving object travels at the subsequent moment.

Based on the first aspect of the embodiments of the present invention, in an optional implementation of the embodiments of the present invention, step C specifically includes the following steps.

Step C1: The vehicle determines, according to a fifth formula, coordinates ($x_{t0+n\Delta t}$, $y_{t0+n\Delta t}$) of a target track point included in the target movement track.

Specifically, if the target status information further includes a lateral velocity $v_{x1}$ of the target moving object and a longitudinal velocity $v_{y1}$ of the target moving object, the vehicle may determine, according to the fifth formula, the coordinates ($x_{t0+n\Delta t}$, $y_{t0+n\Delta t}$) of the target track point included in the target movement track, where the target track point is an $n^{th}$ track point in a plurality of track points included in the target movement track, $t_0$ is the current moment, $\Delta t$ is a predicted time step, and n is a positive integer greater than or equal to 0;

the fifth formula is

$$\begin{cases} x_{t_0} = x_1 \\ y_{t_0} = y_1 \end{cases};$$

and

$$\begin{cases} x_{t_0+n\Delta t} = x_1 + v_{x_1}n\Delta t + \frac{1}{2}a_{x\_sample}[i](n\Delta t)^2 \\ y_{t_0+n\Delta t} = y_1 + v_{y_1}n\Delta t + \frac{1}{2}a_{y1}(n\Delta t)^2 \end{cases},$$

where

$a_{y1}$ is the longitudinal acceleration of the target moving object included in the target status information, and $a_{x\_sample}[i]$ is the target discrete value.

According to this implementation, when the vehicle can accurately predict coordinates of any track point included in the target movement track, the vehicle can predict the target movement track, so as to effectively improve accuracy and efficiency of estimating, by the vehicle, the road region in which the target moving object travels at the subsequent moment.

A specific execution process of step D includes the following steps.

Step D1: The vehicle obtains a target probability value corresponding to each target track point included in the target movement track.

The target probability value corresponding to the target track point is equal to the target probability value corresponding to the target discrete value.

Step D2: The vehicle obtains a target track point that satisfies a regression fitting condition.

The target track point that satisfies the regression fitting condition and that is obtained by the vehicle is a track point corresponding to a target probability value greater than or equal to a preset probability value.

Specifically, when the vehicle determines the target probability value corresponding to the target track point included in the target movement track, if the target probability value is larger, it indicates that the target track point is more likely to belong to the road region of the target moving object at the subsequent moment; and if the target probability value is smaller, it indicates that the target track point is less likely to belong to the road region of the target moving object at the subsequent moment. In this case, to enable the vehicle to remove a track point that is less likely to belong to the road region, thereby improving reliability of the road region in which the vehicle travels at the subsequent moment and that is estimated by the vehicle, the vehicle may perform, by using step D2, filtering on each track point included in the target movement track. In this way, a track point that is more likely to belong to the road region is reserved.

Step D3: The vehicle performs regression fitting based on the target track point that satisfies the regression fitting condition, to obtain the road region in which the target moving object travels at the subsequent moment.

According to this implementation, the track point that is less likely to belong to the road region is effectively removed, to improve the reliability of the road region in which the vehicle travels at the subsequent moment and that is estimated by the vehicle. In this way, accuracy of the road region predicted by the vehicle is improved.

Based on the first aspect of the embodiments of the present invention, in an optional implementation of the embodiments of the present invention, step D1 specifically includes the following steps.

Step D11: The vehicle performs, according to a sixth formula, attenuation processing on a target probability value $P_i$ corresponding to the target track point ($x_{t_0 +n\Delta t}$, $y_{t_0+n\Delta t}$).

A target probability value obtained after the vehicle performs the attenuation processing is a target probability value $P(x_{t_0+n\Delta t}, y_{t_0+n\Delta t})$.

The sixth formula is $P(x_{t_0+n\Delta t}, y_{t_0 +n\Delta t}) = \lambda^n \times P_i$, where $\lambda$ is a preset value.

Step D12: The vehicle determines that the target probability value corresponding to the target track point is the target probability value $p(x_{t_0+n\Delta t}, y_{t_0+n\Delta t})$ obtained after the attenuation processing.

Accuracy of a track point included in the target movement track that is obtained by the vehicle by performing prediction on the target moving object is gradually reduced with time. If the accuracy of the track point estimated by the vehicle is higher, it indicates that a probability that the track point belongs to the road region in which the target moving object travels at the subsequent moment is higher. If the accuracy of the track point estimated by the vehicle is lower, it indicates that a probability that the track point belongs to the road region in which the target moving object travels at the subsequent moment is lower. Therefore, according to this implementation, the vehicle may perform attenuation processing on the target probability value as time goes by, so that accuracy of the track point can be improved by using a target probability value obtained after the attenuation processing.

Based on the first aspect of the embodiments of the present invention, in an optional implementation of the embodiments of the present invention, step D may further include the following steps.

Step D13: The vehicle obtains a plurality of probability values corresponding to the target track point.

Specifically, if determining that the target track point that satisfies a first preset condition can be obtained, the vehicle obtains the plurality of probability values corresponding to the target track point, where the first preset condition is that the target track point is located in different movement tracks.

Step D14: The vehicle determines, as the target probability value corresponding to the target track point, a maximum value of probability values that are corresponding to the target track point in the different movement tracks.

Specifically, when the vehicle predicts a movement track of the moving object at the subsequent moment, there is the target track point that satisfies the first preset condition, that is, the target track point is located in the different movement tracks when there is an overlap between spatial positions in the different movement tracks. To improve accuracy of the track point estimated by the vehicle, the vehicle determines, as the target probability value, the maximum value of the probability values that are corresponding to the target track point in the different movement tracks, so that the accuracy of the track point can be improved by using the target probability value obtained after the attenuation processing.

Based on the first aspect of the embodiments of the present invention, in an optional implementation of the embodiments of the present invention, step D may further include the following steps.

Step D15: The vehicle obtains a historical movement track that has been predicted for the target moving object at a historical moment.

The historical moment is a previous moment of the current moment.

Step D16: The vehicle obtains a first probability value and a second probability value that are corresponding to the target track point.

Specifically, if the target track point that satisfies a second preset condition is obtained, the first probability value and the second probability value that are corresponding to the target track point are obtained, where the second preset condition is that the target track point is located in both the target movement track and the historical movement track, the first probability value is a probability value that is corresponding to the target track point and that is obtained by performing prediction on the target moving object at the current moment, and the second probability value is a probability value that is corresponding to the target track point and that is obtained by performing prediction on the target moving object at the historical moment.

Step D17: The vehicle determines the larger of the first probability value and the second probability value as the target probability value corresponding to the target track point.

If the vehicle has stored the historical movement track that is obtained by performing prediction on the target moving object at the historical moment, the vehicle may obtain the target movement track by performing prediction on the target moving object at the current moment. In addition, the historical movement track and the target movement track intersect at an intersection point, and the intersection point is the target track point that satisfies the second preset condition. In this case, to improve the accuracy of the track point estimated by the vehicle, the vehicle determines the larger of the first probability value and the second probability value as the target probability value corresponding to the target track point.

A second aspect of the embodiments of the present invention provides a driving road estimation system for predicting a road occupancy map of a target moving object according to appended claim 8.

Based on the second aspect of the embodiments of the present invention, in an optional implementation of the embodiments of the present invention, the processing unit includes:

a first obtaining module, configured to set that the target status information satisfies a target Gaussian distribution $N(a_{x1}, \delta^2_{a_{x1}})$, where an expectation of the target Gaussian distribution is the lateral acceleration $ax_1$, a variance of the target Gaussian distribution is $\delta^2_{a_{x1}}$, and the variance $\delta^2_{a_{x1}}$ represents a discrete degree of the target Gaussian distribution $N(a_{x1}, \delta^2_{a_{x1}})$; and the target status information satisfying the target Gaussian distribution $N(a_{x1}, \delta^2_{a_{x1}})$ is discretized into $2(k+1)$ intervals, where $k$ is a preset discretization coefficient;

a sampling module, configured to perform sampling in a target interval to obtain the target discrete value, where the target interval is any one of the $2(k+1)$ intervals obtained after discretization;

a second obtaining module, configured to obtain a target probability value corresponding to the target discrete value, where the target probability value corresponding to the target discrete value is equal to an area of the target interval; and

a setting module, configured to set the target discrete value and the target probability value corresponding to the target discrete value in the parameter sequence.

Based on the second aspect of the embodiments of the present invention, in an optional implementation of the embodiments of the present invention, when the target status information further includes the longitudinal acceleration $a_{y1}$ of the target moving object, and the target interval is an $i^{th}$ interval in the $2(k+1)$ intervals, the second obtaining module specifically includes:

a first calculation submodule, configured to: if i is any integer greater than 0 and less than or equal to $k,$ determine, according to a first formula, the target probability value $P_i$ corresponding to the target discrete value, where the first formula is:

$$P_i = \int_{a_{x1}+(i-1)\times\delta_{a_{x1}}}^{a_{x1}+i\times\delta_{x1}} \frac{1}{\sqrt{2\pi}\delta_{a_{x1}}} \exp\left(-\frac{(a_x - a_{x1})^2}{2\delta^2_{a_{x1}}}\right) da_x$$

, where an integral interval of the first formula is $[a_{x1} + i \times \delta_{ax1}, a_{x1} + (i-$

$1) \times \delta_{a_{x1}}$], an integral variable is $a_x$, an integrand is $\frac{1}{\sqrt{2\pi}\delta_{a_{x1}}}\exp(\frac{(a_x - a_{x1})^2}{2\delta_{a_{x1}}^2})$ , and $\exp(\frac{(a_x - a_{x1})^2}{2\delta_{a_{x1}}^2})$ is a

$(-\frac{(a_x - a_{x1})^2}{2\delta_{a_{x1}}^2})^{th}$ power of e ;

a second calculation submodule, configured to: if i is any integer greater than $-k$ and less than 0, determine, according to a second formula, the target probability value $P_i$ corresponding to the target discrete value, where the second formula is:

$$P_i = \int_{a_{x1} + i \times \delta_{a_{x1}}}^{a_{x1} + (i+1) \times \delta_{a_{x1}}} \frac{1}{\sqrt{2\pi}\delta_{a_{x1}}}\exp(-\frac{(a_x - a_{x1})^2}{2\delta_{a_{x1}}^2})da_x$$ , where an integral interval of the second formula is $[a_{x1}$

$+(i+1) \times \delta_{ax1}, a_{x1} + i \times \delta_{ax1}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$ , and

$\exp(-\frac{(a_x - a_{x1})^2}{2\delta_{a_{x1}}^2})$ is a $(-\frac{(a_x - a_{x1})^2}{2\delta_{a_{x1}}^2})^{th}$ power of e ;

a third calculation submodule, configured to: if i is equal to $-k-1$, determine, according to a third formula, the target probability value $P_i$ corresponding to the target discrete value, where the third formula is:

$$P_i = \int_{a_{xmin}}^{a_{x1} - k \times \delta_{a_{x1}}} \frac{1}{\sqrt{2\pi}\delta_{a_{x1}}}\exp(-\frac{(a_x - a_{x1})^2}{2\delta_{a_{x1}}^2})da_x$$ , where $a_{xmin} = -\sqrt{a_{max}^2 - a_{y1}^2}$ , $a_{max}$ represents a maximum acceleration of the target moving object, an integral interval of the third formula is $[a_{x1} - k \times \delta_{a_{x1}}, axmin]$, an integral variable

is $a_x$, an integrand is $\frac{1}{\sqrt{2\pi}\delta_{a_{x1}}}\exp(-\frac{(a_x - a_{x1})^2}{2\delta_{a_{x1}}^2})$ , and $\exp(-\frac{(a_x - a_{x1})^2}{2\delta_{a_{x1}}^2})$ is a $(-\frac{(a_x - a_{x1})^2}{2\delta_{a_{x1}}^2})^{th}$ power of e; or

a fourth calculation submodule, configured to: if i is equal to k + 1, determine, according to a fourth formula, the target probability value $P_i$ corresponding to the target discrete value, where the fourth formula is:

$$P_i = \int_{a_{x1} + k \times \delta_{a_{x1}}}^{a_{xmax}} \frac{1}{\sqrt{2\pi}\delta_{a_{x1}}}\exp(-\frac{(a_x - a_{x1})^2}{2\delta_{a_{x1}}^2})da_x$$ , where $a_{xmax} = \sqrt{a_{max}^2 - a_{y1}^2}$ , an integral interval of the fourth formula is $[a_{xmax}, a_{x1} + k \times \delta_{ax1}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$ ,

and $\exp(-\frac{(a_x - a_{x1})^2}{2\delta_{a_{x1}}^2})$ is a $(-\frac{(a_x - a_{x1})^2}{2\delta_{a_{x1}}^2})^{th}$ power of e.

Based on the second aspect of the embodiments of the present invention, in an optional implementation of the embodiments of the present invention, if the target status information further includes the lateral velocity $v_{x1}$ of the target moving object and the longitudinal velocity $v_{y1}$ of the target moving object, the prediction unit is specifically configured to: determine, according to a fifth formula, coordinates $(x_{t0+n\Delta t}, y_{t0+n\Delta t})$ of a target track point included in the target movement track, where the target track point is an $n^{th}$ track point in a plurality of track points included in the target movement track, $t_0$ is the current moment, $\Delta t$ is a predicted time step, and n is a positive integer greater than or equal to 0;

the fifth formula is

$$\begin{cases} x_{t_0} = x_1 \\ y_{t_0} = y_1 \end{cases};$$

and

$$\begin{cases} x_{t_0+n\Delta t} = x_1 + v_{x_1} n\Delta t + \dfrac{1}{2} a_{x\_sample}[\mathrm{i}](n\Delta t)^2 \\ y_{t_0+n\Delta t} = y_1 + v_{y_1} n\Delta t + \dfrac{1}{2} a_{y1}(n\Delta t)^2 \end{cases},$$

where

$a_{y1}$ is the longitudinal acceleration of the target moving object included in the target status information, and $a_{x\_sample}[i]$ is the target discrete value.

The determining unit includes:

a first determining module, configured to obtain a target probability value corresponding to the target track point included in the target movement track, where the target probability value corresponding to the target track point is equal to the target probability value corresponding to the target discrete value;
a second determining module, configured to obtain a target track point that satisfies a regression fitting condition, where the target track point that satisfies the regression fitting condition is a track point corresponding to a target probability value greater than or equal to a preset probability value; and
a third determining module, configured to perform regression fitting based on the target track point that satisfies the regression fitting condition, to obtain the road region in which the target moving object travels at the subsequent moment.

Based on the second aspect of the embodiments of the present invention, in an optional implementation of the embodiments of the present invention, the first determining module includes:

a first determining submodule, configured to perform, according to a sixth formula, attenuation processing on a target probability value P, corresponding to the target track point $(x_{t_0+n\Delta t}, y_{t_0+n\Delta t})$ to obtain a target probability value $P(x_{t_0+n\Delta t}, y_{t_0+n\Delta t})$ after the attenuation processing, where
the sixth formula is $P(x_{t_0+n\Delta t}, y_{t_0+n\Delta t}) = \lambda^n \times P_i$, where $\lambda$ is a preset value; and
a second determining submodule, configured to determine that the target probability value corresponding to the target track point is the target probability value $P(x_{t_0+n\Delta t}, y_{t_0+n\Delta t})$ obtained after the attenuation processing.

Based on the second aspect of the embodiments of the present invention, in an optional implementation of the embodiments of the present invention, the first determining module includes:

a third determining submodule, configured to: if the target track point that satisfies a first preset condition is obtained, obtain a plurality of probability values corresponding to the target track point, where the first preset condition is that the target track point is located in different movement tracks; and
a fourth determining submodule, configured to determine, as the target probability value corresponding to the target track point, a maximum value of probability values that are corresponding to the target track point in the different movement tracks.

Based on the second aspect of the embodiments of the present invention, in an optional implementation of the embodiments of the present invention, the first determining module includes:

a fifth determining submodule, configured to obtain a historical movement track that has been predicted for the target moving object at a historical moment, where the historical moment is a previous moment of the current moment; a sixth determining submodule, configured to: if the target track point that satisfies a second preset condition is obtained, obtain a first probability value and a second probability value that are corresponding to the target track point, where the second preset condition is that the target track point is located in both the target movement track and the historical movement track, the first probability value is a probability value that is corresponding to the target track point and that is obtained by performing prediction on the target moving object at the current moment, and the second probability value is a probability value that is corresponding to the target track point and that is obtained by performing prediction on the target moving object at the historical moment; and a seventh determining submodule, configured to determine the larger of the first probability value and the second probability value as the target probability value corresponding to the target track point.

A fourth aspect of the embodiments of the present invention provides a computer-readable storage medium according to appended claim 15.

According to the method and the system that are provided in this application, when obtaining the target status information of the surrounding target moving object, the vehicle may perform discretization processing on the target status information to obtain the parameter sequence, so that the vehicle can perform prediction based on the target status information and the target discrete value that is included in the parameter sequence, to obtain the target movement track. In this way, the vehicle can determine, based on the target movement track, the road region in which the target moving object travels at the subsequent moment, and then the vehicle can determine the region in which the vehicle travels at the subsequent moment, so that the region in which the vehicle travels at the subsequent moment does not overlap the region in which the target moving object travels at the subsequent moment. It can be learned that according to the method in the embodiments, even in a case of a severe traffic condition, such as a road congestion scenario and a night scenario in which a traffic condition is indefinite, the vehicle needs to obtain only the target status information of the target moving object at the current moment, to estimate the road region in which the vehicle travels at the subsequent moment, without relying on a surrounding environment. In this way, the vehicle can safely travel in the estimated road region, thereby effectively improving driving safety and reliability of the vehicle.

**BRIEF DESCRIPTION OF DRAWINGS**

FIG. 1 is a schematic structural diagram of an embodiment of a driving road estimation system according to the present invention;

FIG. 2 is a schematic structural diagram of another embodiment of a driving road estimation system according to the present invention;

FIG. 3 is a step flowchart of an embodiment of a driving road estimation method according to the present invention;

FIG. 4 is a schematic diagram of a scenario of an embodiment of a driving road estimation method according to the present invention;

FIG. 5 is a schematic diagram of a scenario of another embodiment of a driving road estimation method according to the present invention;

FIG. 6 is a schematic diagram of a scenario of another embodiment of a driving road estimation method according to the present invention;

FIG. 7 is a schematic diagram of a scenario of another embodiment of a driving road estimation method according to the present invention;

FIG. 8 is a schematic diagram of a scenario of another embodiment of a driving road estimation method according to the present invention;

FIG. 9 is a schematic diagram of a scenario of another embodiment of a driving road estimation method according to the present invention;

FIG. 10 is a step flowchart of another embodiment of a driving road estimation method according to the present invention;

FIG. 11 is a schematic diagram of a scenario of another embodiment of a driving road estimation method according to the present invention;

FIG. 12 is a schematic diagram of a scenario of another embodiment of a driving road estimation method according to the present invention;

FIG. 13 is a schematic structural diagram of an embodiment of a generalized regression neural network according to the present invention;

FIG. 14 is a schematic structural diagram of another embodiment of a driving road estimation system according to the present invention; and

FIG. 15 is a schematic structural diagram of another embodiment of a driving road estimation system according to the present invention.

**DESCRIPTION OF EMBODIMENTS**

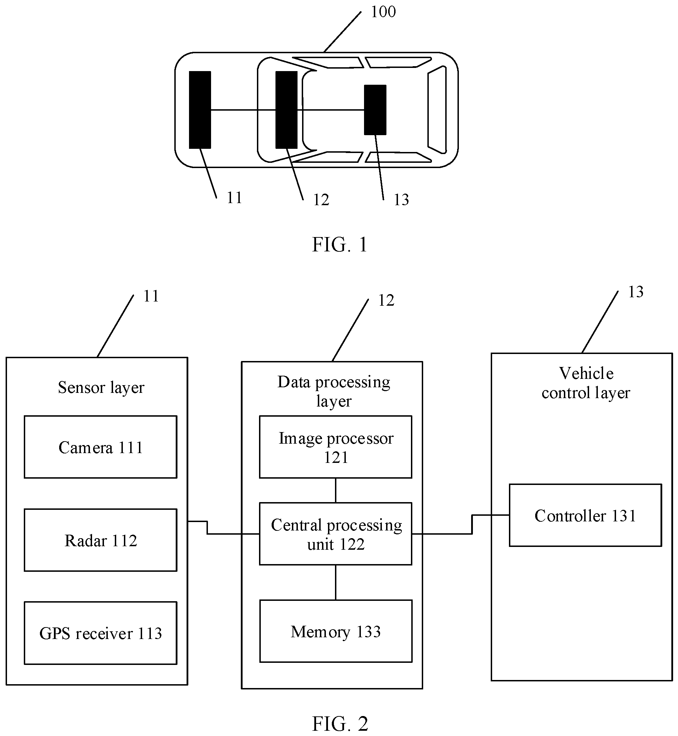

This application provides a driving road estimation method and a driving road estimation system. For better understanding of the driving road estimation method provided in this application, a specific hardware structure of a driving road estimation system to which the driving road estimation method is applied is first described with reference to FIG. 1 by using an example.

First, it should be noted that the driving road estimation system in this application not only can be applied to driving of a vehicle, but also can be applied to driving of an airplane or a ship, so that the airplane or the ship can also travel on a traveling path. In this application, an example in which the driving road estimation system is applied to driving of a vehicle is used for description.

As shown in FIG. 1, an example in which the driving road estimation system in this embodiment is applied to a vehicle 100 is used for description. In another embodiment, the driving road estimation system may alternatively run on a separate computing device. In this case, when the vehicle needs to perform driving road estimation, the computing device on which the driving road estimation system runs may be installed on the vehicle, so that the vehicle can perform the driving road estimation method in this application.

Specifically, the driving road estimation system in this embodiment may include a sensor layer 11, a data processing layer 12, and a vehicle control layer 13.

Referring to FIG. 2, a specific structure of the driving road estimation system is described.

The sensor layer 11 includes a camera 111, radar 112, a global positioning system (global positioning system, GPS) receiver 113, and the like. The camera 111 is responsible for acquiring a road scenario image. Optionally, a specific device type of the camera 111 is not limited in this embodiment, provided that the camera 111 can acquire a scenario image of a road on which the vehicle exists. For example, the camera 111 may be a monocular camera. For another example, the camera 111 may be a binocular camera. The radar 112 is responsible for data acquisition of a dynamic obstacle and data acquisition of a static obstacle to generate obstacle status data. Specifically, the obstacle status data may be a position, a movement velocity, a movement direction, or the like of an obstacle. The radar 112 in this embodiment may be laser radar, millimeter-wave radar, or the like. The GPS receiver 113 is configured to receive a GPS signal and provide an initialized reference position for vehicle positioning. The GPS receiver 113 is an instrument for receiving a GPS satellite signal and determining a ground space position, where a navigation and positioning signal sent by a GPS satellite is an information resource that can be shared by a large quantity of users. Vast users on land and sea and in space have receiving devices capable of receiving, tracking, converting, and measuring GPS signals, and the GPS receiver 113 may obtain a positioning result with rough precision (precision ranging from several meters to tens of meters) by performing calculation on a received GPS signal.

The data processing layer 12 includes an image processor 121, a central processing unit (central processing unit, CPU) 122, and a memory 133. The memory 133 stores a computer-readable program, and the CPU 122 may run the computer-readable program. In this case, the CPU 122 obtains, by running the computer-readable program, the road scenario image acquired by the camera 101 and the obstacle status data acquired by the radar 112, and sends the obtained road scenario image and obstacle status data to the image processor 121. The image processor 121 is configured to perform operations such as lane line recognition, road edge recognition, vehicle recognition, non-motor vehicle recognition, and pedestrian recognition on the road scenario image and the obstacle status data, to generate recognition result data, where the recognition result data is used to indicate a lane line, a road edge, a vehicle, a non-motor vehicle, a pedestrian, and the like that have been recognized by the image processor 121.

The image processor 121 sends the recognition result data to the CPU 122, so that the CPU 122 can perform road prediction, road merging, road extraction, and the like based on the recognition result data and the obstacle status data that is acquired by the radar 112, to generate a control signal. The CPU 122 is configured to control the vehicle based on the control information, so that the vehicle travels according to a planned track.

The vehicle control layer 13 includes a controller 131. The controller 131 is configured to receive the control signal sent by the CPU 122, and implement lateral and/or longitudinal control on the vehicle based on the control signal.

A specific position of each of the foregoing components on the vehicle is not limited in this embodiment, provided that a corresponding function of the component can be implemented.

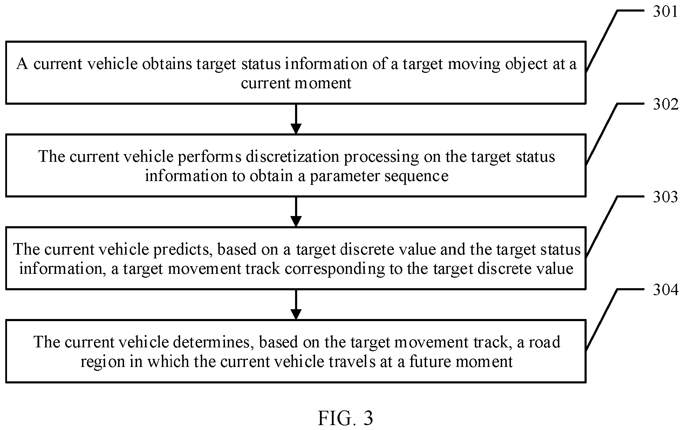

Based on the driving road estimation system shown in FIG. 1, with reference to FIG. 3, the following describes in detail a specific execution process of the driving road estimation method provided in this embodiment.

Step 301: The vehicle obtains target status information of a target moving object at a current moment.

In this embodiment, the vehicle may directly perform step 301 in a traveling process to perform the step of obtaining, by the vehicle, target status information of a target moving object at a current moment; or when determining that a target condition is satisfied, the vehicle may perform the step of obtaining, by the vehicle, target status information of a target moving object at a current moment. The following describes the target condition.

The target condition in this embodiment may be that the vehicle fails to obtain road information of a current road, where the current road is a road on which the vehicle is currently located. The road information is used to indicate a driving status of the current road, for example, a geometric structure of the current road, a type and a position of a lane line, and a type and a position of a traffic light.

A reason why the vehicle fails to obtain the road information may be that the vehicle fails to query a high-precision map and fails to obtain the road information. The high-precision electronic map provides map data with higher precision (centimeter-level precision) that is used for autonomous driving. A reason why the vehicle fails to obtain the road information may be that the vehicle cannot detect the road information based on the sensor layer due to a poor driving environment of the vehicle. The poor driving environment in this embodiment may be a case in which the vehicle travels in a night scenario, a case in which there is no lane line on the current road, or the like. A reason why the vehicle fails to obtain the road information may alternatively be that the vehicle fails in positioning, for example, the vehicle fails to obtain GPS positioning data.

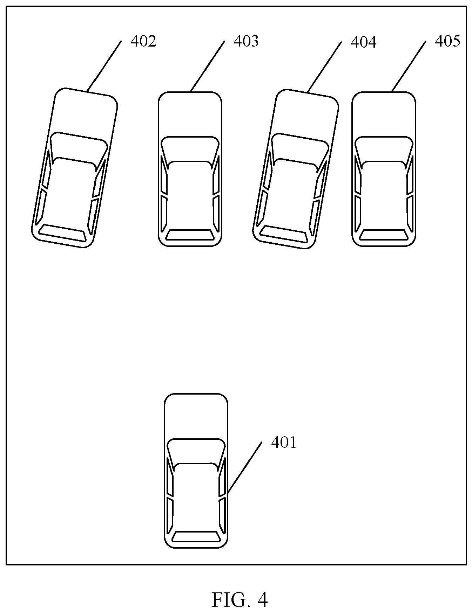

For a scenario in which the vehicle fails to obtain the road information of the current road, refer to FIG. 4. As shown in FIG. 4, a vehicle 402, a vehicle 403, a vehicle 404, and a vehicle 405 that are ahead of a vehicle 401 block lane lines of the current road, and therefore the vehicle 401 fails to obtain the road information of the current road. In this case, the vehicle 401 can determine a target moving object on which driving road estimation needs to be performed.

The following describes a specific process in which the vehicle determines the target moving object.

The target moving object is described first. The target moving object in this embodiment is any one of at least one moving object around the vehicle 401. For example, the moving object may be an object that can affect a traveling track of the vehicle, such as a vehicle, a non-motor vehicle, or a pedestrian.

To reduce a computation amount of the driving road estimation in this embodiment, the vehicle 401 may determine that the target moving object is a moving object ahead of the vehicle 401. Using FIG. 4 as an example, target moving objects may be the vehicle 402, the vehicle 403, the vehicle 404, and the vehicle 405.

After determining the target moving object, the vehicle may determine target status information of the target moving object at a current moment.

The following describes specific content included in the target status information.

The target status information determined by the vehicle may be attribute information of the target moving object. The attribute information of the target moving object is used to indicate a type of the target moving object. The type of the target moving object in this embodiment may be a vehicle, a non-motor vehicle, a pedestrian, or the like.

Alternatively, the target status information may be position information of the target moving object. Specifically, the position information of the target moving object is position information of the target moving object in a GPS coordinate system.

Alternatively, the target status information may be movement velocities of the target moving object. Specifically, the movement velocities of the target moving object may include a lateral movement velocity Vx along an X-axis and a longitudinal movement velocity Vy along a Y-axis that are of the target moving object in the GPS coordinate system.

Alternatively, the target status information may be accelerations of the target moving object. Specifically, the accelerations of the target moving object may include a lateral acceleration ax along the X-axis and a longitudinal acceleration ay along the Y-axis that are of the target moving object in the GPS coordinate system.

Alternatively, the target status information may be a movement direction θ of the target moving object in the GPS coordinate system.

Using FIG. 4 as an example, if the vehicle 401 determines that the target moving object is the vehicle 402, status information that is corresponding to the vehicle 402 and that is obtained by the vehicle 401 may be {attribute information (type): vehicle, position information (position): $(x_1, y_1)$, movement velocity (velocity): $(V_{x1}, V_{y1})$, acceleration (acceleration): $(a_{x1}, a_{y1})$, movement direction (heading): θ1}.

By analogy, status information that is corresponding to the vehicle 403 and that may be obtained by the vehicle 401 is {type: vehicle, position: $(x_2, y_2)$, velocity: $(V_{x2}, V_{y2})$, acceleration: $(a_{x2}, a_{y2})$, heading: θ2}; status information that is corresponding to the vehicle 404 and that may be obtained by the vehicle 401 is {type: vehicle, position: $(x_3, y_3)$, velocity: $(V_{x3}, V_{y3})$, acceleration: $(a_{x3}, a_{y3})$, heading: θ3}; and status information that is corresponding to the vehicle 405 and that may be obtained by the vehicle 401 is {type: vehicle, position: $(x_4, y_4)$, velocity: $(V_{x4}, V_{y4})$, acceleration: $(a_{x4}, a_{y4})$, heading: θ4}.

Step 302: The vehicle performs discretization processing on the target status information to obtain a parameter sequence.

To estimate a driving road without relying on detection of an environment around the vehicle, the vehicle needs to estimate the movement direction of the target moving object, and can predict a movement track of the vehicle at a subsequent moment based on the estimated movement direction of the target moving object.

The following describes a manner in which the vehicle estimates the movement direction of the target moving object.

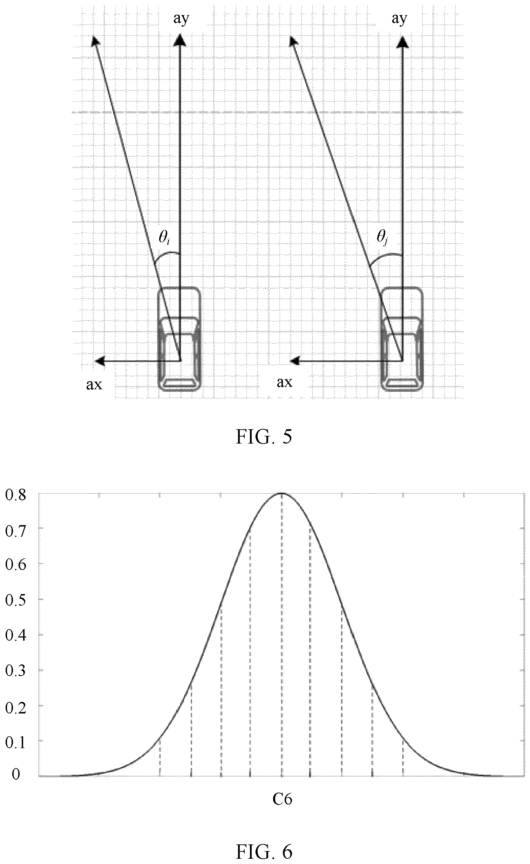

An example in which the moving object is a vehicle is used for description. For the vehicle, a change in a movement direction of the vehicle is limited by an acceleration of the vehicle. To be specific, different lateral accelerations $a_x$ and different longitudinal accelerations $a_y$ of the vehicle cause a change in the movement direction of the vehicle. Using FIG. 5 as an example, FIG. 5 is a grid graph drawn for a vehicle for a current road on which the vehicle is located. In this embodiment, an example in which radar included in the vehicle is laser radar is used for description. Because precision of the laser radar is 5 centimeters, a size of each grid of the grid graph drawn for the vehicle is $5 \times 5$ centimeters. A lateral acceleration $a_x$ and a longitudinal acceleration $a_y$ of a vehicle shown on a left side of FIG. 5 are respectively different from those of a vehicle shown on a right side of FIG. 5. Consequently, a movement direction $\theta i$ of the vehicle shown on the left side of FIG. 5 is different from a movement direction $\theta j$ of the vehicle shown on the right side of FIG. 5.

It can be learned that discretization processing on the acceleration of the vehicle approximates to discretization processing on the movement direction of the vehicle. However, because the vehicle in this embodiment needs to perform driving road estimation, the vehicle is more concerned about whether a feasible region of a road is wide enough in a driving process of the vehicle. Therefore, the vehicle needs to estimate impact of a lateral acceleration of a vehicle ahead on a movement direction of the vehicle ahead. Therefore, the vehicle only needs to perform discretization processing on a lateral acceleration of a moving object.

A manner in which the vehicle performs discretization processing on the lateral acceleration of the moving object is not limited in this embodiment, provided that the lateral acceleration of the moving object that is presented as continuous data can be discretized into discrete data. In this embodiment, an example in which the vehicle performs discretization processing on the lateral acceleration of the moving object in a probability discretization processing manner that is based on Gaussian distribution (gaussian distribution) is used for description.

Specifically, using an example in which the target moving object is the vehicle 402, the vehicle may set that a lateral acceleration of the vehicle 402 satisfies a target Gaussian distribution $N(a_{x1}, \delta_{a_{x1}}^2)$ shown in FIG. 6.

As shown in FIG. 6, the lateral acceleration $a_{x1}$ in the target Gaussian distribution is discretized into a bell-shaped region, an expectation of the target Gaussian distribution is the lateral acceleration $a_{x1}$ of the vehicle 402, a variance of the target Gaussian distribution is $\delta_{a_{x1}}^2$, and the variance $\delta_{a_{x1}}^2$ represents a discrete degree of the target Gaussian distribution $N(a_{x1}, \delta_{a_{x1}}^2)$; and the bell-shaped region presented by the lateral acceleration $a_{x1}$ satisfying the target Gaussian distribution $N(a_{x1}, \delta_{a_{x1}}^2)$ is discretized into $2(k+1)$ intervals shown in FIG. 6, where $k$ is a preset discretization coefficient. A specific value range of $k$ is not limited in this embodiment.

Optionally, $k$ in this embodiment may be inversely proportional to resolution f of a map stored in the vehicle, that is, $k \propto 1/f$, and the resolution f of the map is measured by using meters.

Specifically, a coordinate point at a central position of the bell-shaped region is C1, and a value of C1 is the lateral acceleration $a_{x1}$ of the vehicle 402. In other words, the bell-shaped region is symmetrically distributed by using the horizontal coordinate C1 as a center, a left side of the horizontal coordinate C1 is a negative direction of the bell-shaped region, and a right side of the horizontal coordinate C 1 is a positive direction of the bell-shaped region. In this case, the $2(k+1)$ intervals may be represented as P={$P_{-k-1}$, $P_{-k}$, ..., $P_i$, ..., $P_{k+1}$}, where i is a non-zero integer in an interval [-$k$ -1, $k$ + 1].

Specifically, an interval P-k obtained after the lateral acceleration $a_{x1}$ is discretized indicates k intervals that are on the left side of the horizontal coordinate C1 and that are in the $2(k+1)$ intervals obtained after the lateral acceleration $a_{x1}$ is discretized; and an interval Pi obtained after the lateral acceleration $a_{x1}$ is discretized indicates i intervals that are on the right side of the horizontal coordinate C1 and that are in the $2(k+1)$ intervals obtained after the lateral acceleration $a_{x1}$ is discretized.

After discretization processing is performed on the lateral acceleration $a_{x1}$ of the vehicle 402, the vehicle can perform sampling in a target interval to obtain a target discrete value, where the target interval is any interval included in the $2(k+1)$ intervals formed by the bell-shaped region that is obtained after the lateral acceleration of the vehicle 402 is discretized.

The vehicle creates a parameter sequence based on a sampled value obtained by performing sampling in any one of the $2(k+1)$ intervals, where the parameter sequence includes a discrete value obtained by performing sampling in any one of the $2(k+1)$ intervals that are obtained after the lateral acceleration of the vehicle 402 is discretized. Specifically, the parameter sequence is S={$(a_{x\_sample[-k-1]})$, $(a_{x\_sample[-k]})$, ..., $(a_{x\_sample[i]})$, ..., $(a_{x\_sample[k]})$, $(a_{x\_sample[k+1]})$}, where $a_{x\_sample[i]}$ represents a discrete value obtained by performing sampling by the vehicle in an $i^{th}$

interval in the 2( $k$ +1) intervals.

Step 303: The vehicle predicts, based on a target discrete value and the target status information, a target movement track corresponding to the target discrete value.

The target discrete value is any one of a plurality of discrete values included in the parameter sequence.

It can be learned from the foregoing description that the vehicle can obtain the target discrete value by performing sampling based on any target interval included in the 2( $k$ +1) intervals obtained after the discretization processing, and can predict the target movement track based on the target discrete value. It can be learned that the vehicle can predict 2( $k$ +1) movement tracks by predicting the 2( $k$ +1) intervals, where the 2( $k$ +1) movement tracks may be represented as T={$T_{-k-1}$, ..., $T_i$, ..., $T_{k+1}$}, and a target movement track $T_i$ is an $i^{th}$ track in the 2( $k$ +1) movement tracks.

The following describes a specific process in which the vehicle predicts the target movement track $T_i$ based on the target discrete value.

The target movement track Ti in this embodiment includes a series of track points. Specifically, the target movement track is $T_i$ = {$(x_{t_0}, y_{t_0})$, $(x_{t_0+\Delta t}, y_{t_0+\Delta t})$,..., $(x_{t_0+n\Delta t}, y_{t_0+n\Delta t})$}, where t0 represents a current moment, $\Delta t$ is a predicted time step, n$\Delta t$ represents a total time for the vehicle to perform forward prediction. A specific value of $\Delta t$ is not limited in this embodiment. In this embodiment, an example in which $\Delta t$ is any value from 3 seconds to 5 seconds is used for description. n is a positive integer greater than or equal to 0. Coordinates of a target track point included in the target motion track $T_i$ are $(x_{t_0+n\Delta t}, y_{t_0+n\Delta t})$. The target track point is an $n^{th}$ track point in a plurality of track points included in the target movement track $T_i$. It can be learned that when the vehicle has determined coordinates of all the track points included in the target track point $T_i$, the vehicle can determine the target movement track $T_i$.

More specifically, the vehicle may determine the target movement track according to a fifth formula.

The fifth formula in this embodiment is:

$$\begin{cases} x_{t_0} = x_1 \\ y_{t_0} = y_1 \end{cases};$$

and

$$\begin{cases} x_{t_0+n\Delta t} = x_1 + v_{x_1} n\Delta t + \frac{1}{2} a_{x\_sample}[\mathrm{i}](n\Delta t)^2 \\ y_{t_0+n\Delta t} = y_1 + v_{y_1} n\Delta t + \frac{1}{2} a_{y1}(n\Delta t)^2 \end{cases},$$

where

in the fifth formula, $a_{y1}$ is the longitudinal acceleration included in the target status information, and $a_{x\_sample}[i]$ is the target discrete value.

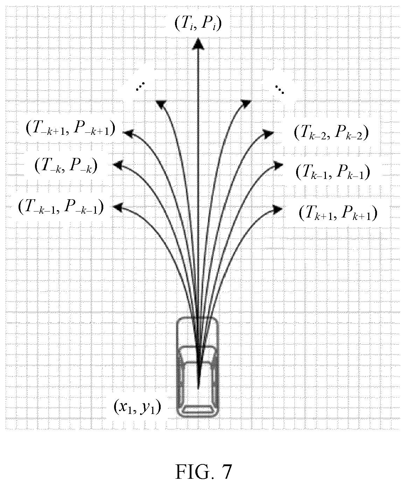

Referring to the foregoing process in which the vehicle predicts the target movement track $T_i$ according to the fifth formula, the vehicle can predict any one of the 2( $k$ +1) movement tracks, as shown in FIG. 7.

Step 304: The vehicle determines, based on the target movement track, a road region in which the target moving object travels at a subsequent moment.

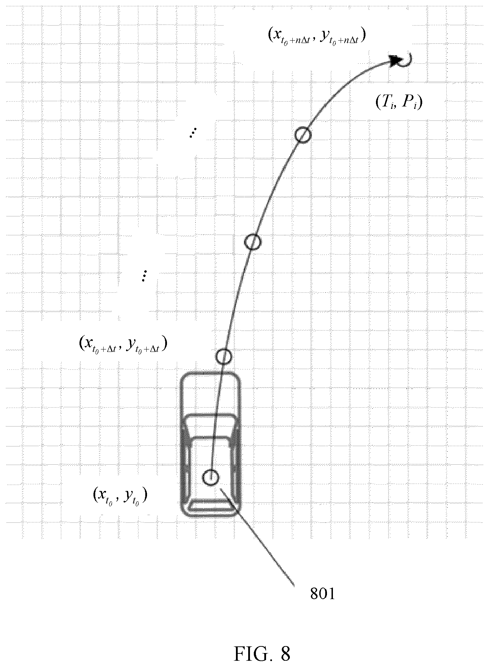

With reference to FIG. 8, the following describes, by using an example, a manner in which the road region based on the target movement track is determined. FIG. 8 shows a target movement track predicted by the vehicle by performing estimation on a target moving object 801.

Specifically, if the vehicle determines the target movement track, the vehicle can determine a road occupancy map of the target moving object 801 at the subsequent moment based on the target movement track, where the subsequent moment is a next moment of the current moment.

Optionally, an optional manner in which the vehicle determines the road occupancy map of the target moving object 801 at the subsequent moment is as follows.

More specifically, the vehicle may obtain target status information of the target moving object 801. The target status information in this embodiment may further include a vehicle width L of the target moving object 801. In this case, the vehicle may perform first preset processing on a horizontal coordinate of any track point included in the target movement track to obtain a first track point. All first track points determined by the vehicle may form a left lane boundary line of the target moving object 801 at the subsequent moment. The vehicle may further perform second preset processing on a vertical coordinate of any track point included in the target movement track to obtain a second track point. All second track points determined by the vehicle may form a right lane boundary line of the target moving object 801 at the subsequent moment.

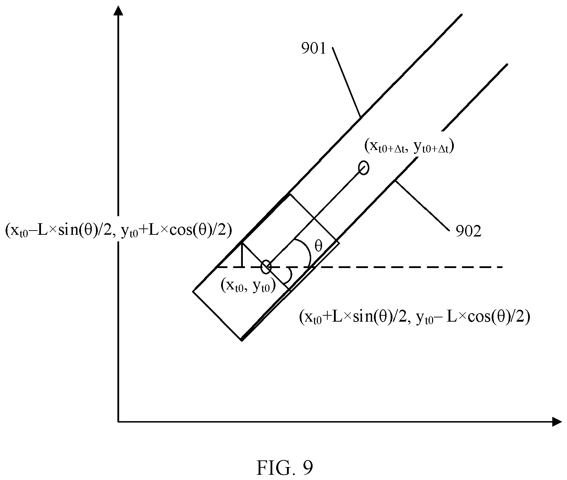

Using FIG. 9 as an example, after first preset processing is performed on a horizontal coordinate of any track point included in the target movement track to obtain all first track points, all the first track points may form a left lane boundary line 901 of the target moving object 801 at the subsequent moment.

The left lane boundary line 901 of the target moving object 801 at the subsequent moment is

$$\left\{ \left( x_{t_0} - L \times sin(\theta 1)/2,\ y_{t_0} + L \times cos(\theta 1)/2 \right),\ \left( x_{t_0 + \Delta t} - L \times sin(\theta 2)/2,\ y_{t_0 + \Delta t} + L \times cos(\theta 2)/2 \right),\ ...,\ \left( x_{t_0 + n\Delta t} - L \times sin(\theta n)/2,\ y_{t_0 + n\Delta t} + L \times cos(\theta n)/2 \right) \right\}.$$

After second preset processing is performed on a vertical coordinate of any track point included in the target movement track to obtain all second track points, all the second track points may form a right lane boundary line 902 of the target moving object 801 at the subsequent moment.

The right lane boundary line 902 of the target moving object 801 at the subsequent moment is

$$\left\{ \left( x_{t_0} + L \times sin(\theta 1)/2,\ y_{t_0} - L \times cos(\theta 1)/2 \right),\ \left( x_{t_0 + \Delta t} + L \times sin(\theta 2)/2,\ y_{t_0 + \Delta t} - L \times cos(\theta 2)/2 \right),\ ...,\ \left( x_{t_0 + n\Delta t} + L \times sin(\theta n)/2,\ y_{t_0 + n\Delta t} - L \times cos(\theta n)/2 \right) \right\},$$

where

$$\theta_i = arctan[(y_{t_0 + i \mathrm{V}t} - y_{t_0 + (i-1)\mathrm{V}t}) / (x_{t_0 + i \mathrm{V}t} - x_{t_0 + (i-1)\mathrm{V}t})],$$

and $\theta n = \theta n - \theta 1$.

The vehicle may form the road occupancy map of the target moving object 801 at the subsequent moment based on the determined left lane boundary line and right lane boundary line.

Optionally, another optional manner in which the vehicle determines the road occupancy map of the target moving object 801 at the subsequent moment is as follows.

The vehicle determines that the target movement track is a lane central axis of the road occupancy map of the target moving object 801 at the subsequent moment. In this case, when the vehicle has determined the lane central axis of the road occupancy map of the target moving object 801 at the subsequent moment, the vehicle can determine the road occupancy map of the target moving object 801 at the subsequent moment.

It can be learned that based on the foregoing process, the vehicle may determine road occupancy maps of all moving objects ahead of the vehicle at the subsequent moment, and in this case, the vehicle can estimate the road region in which the target moving object travels at the subsequent moment. A specific extension direction of the road region is not limited in this embodiment.

Still referring to FIG. 4, the vehicle may obtain road regions in which the target moving object 402, the target moving object 403, the target moving object 404, and the target moving object 405 travel at the subsequent moment. In this case, the vehicle can estimate a road region in which the vehicle travels at the subsequent moment. The road region in which the vehicle travels at the subsequent moment is not limited in this embodiment, provided that the road region in which the vehicle travels at the subsequent moment does not overlap the estimated road region in which the target moving object travels at the subsequent moment. Using FIG. 4 as an example, the road region in which the vehicle travels at the subsequent moment does not overlap the road region in which the target moving object 402 travels at the subsequent moment, the road region in which the target moving object 403 travels at the subsequent moment, the road region in which the target moving object 404 travels at the subsequent moment, and the road region in which the target moving object 405 travels at the subsequent moment. This ensures that the vehicle does not collide with the target moving object 402, the target moving object 403, the target moving object 404, and the target moving object 405 in a traveling scenario at the subsequent moment, thereby implementing safe driving.

Beneficial effects of using the driving road estimation method in this embodiment are as follows.

According to the method in this embodiment, the vehicle obtains the target status information of the target moving object at the current moment; the vehicle directly performs, without relying on a current driving environment, discretization processing on the target status information to obtain the parameter sequence, and then can obtain the target movement track based on the parameter sequence; and the vehicle can estimate, by performing calculation on the target movement track, the road region in which the vehicle travels at the subsequent moment. In a process of obtaining the road region, the vehicle does not need to rely on a driving environment. Therefore, even in a severe environment, for example, in a night traveling scenario and a complex traffic scenario, the vehicle can accurately estimate the road region in which the vehicle travels, without tracking the target moving object, thereby improving accuracy and robustness of estimating the road region in which the vehicle travels at the subsequent moment. This provides a safety assurance for autonomous driving.

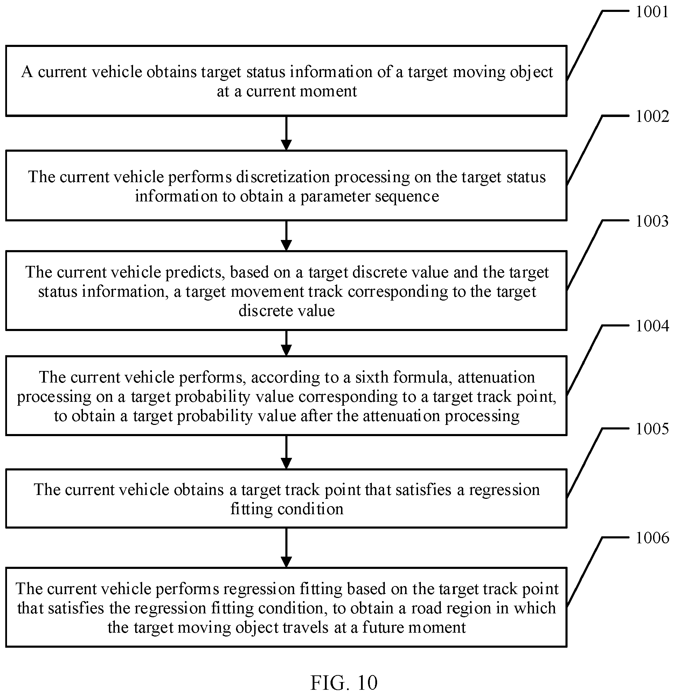

The vehicle may predict, based on the embodiment in FIG. 3, a road occupancy map of each target moving object at a subsequent moment. With reference to an embodiment shown in FIG. 10, the following describes a specific process of improving accuracy of a road region, predicted by a vehicle, at a subsequent moment.

Step 1001: The vehicle obtains target status information of a target moving object at a current moment.

For details about a specific execution process of step 1001 in this embodiment, refer to step 301 shown in FIG. 3. The details are not described in this embodiment again.

Step 1002: The vehicle performs discretization processing on the target status information to obtain a parameter sequence.

In the embodiment shown in FIG. 3, the parameter sequence includes a target discrete value obtained by performing sampling in any one of $2(k+1)$ intervals obtained after a lateral acceleration of the target moving object is discretized. Specifically, the parameter sequence is s={$(a_{x\_sample}[-k-1])$, $(a_{x\_sample}[-k])$, ..., $(a_{x\_sample}[i])$, ..., $(a_{x\_sample}[k])$, $(a_{x\_sample}[k+1])$}, where $a_{x\_sample}[i]$ represents a discrete value obtained by performing sampling by the vehicle in an $i^{th}$ interval in the $2(k+1)$ intervals.

In contrast, in this embodiment, compared with the parameter sequence shown in FIG. 3, the parameter sequence in this embodiment further includes a target probability value corresponding to the target discrete value. A specific process is as follows.

A target probability value corresponding to the target discrete value obtained by the vehicle through sampling in the target interval is equal to a target probability value corresponding to the target interval. It can be learned that when determining the target probability value corresponding to the target interval, the vehicle can determine the target probability value that is corresponding to the target discrete value and that is equal to the target probability value corresponding to the target interval.

The following describes, by using an example, a specific process in which the vehicle obtains the target probability value corresponding to the target interval.

Specifically, if the target probability value corresponding to the target interval is equal to an area of the target interval, the vehicle may calculate, by calculating the area of the target interval, the target probability value corresponding to the target interval.

A specific process in which the vehicle calculates the area of the target interval is as follows.

If the target interval is an $i^{th}$ interval in the $2(k+1)$ intervals, and when the vehicle determines that i is any integer greater than 0 and less than or equal to $k$, the vehicle may determine, according to a first formula, the target probability

$$P_i = \int_{a_{x1}+(i-1)\times\delta_{a_{x1}}}^{a_{x1}+i\times\delta_{a_{x1}}} \frac{1}{\sqrt{2\pi}\delta_{a_{x1}}} \exp(-\frac{(a_x - a_{x1})^2}{2\delta_{a_{x1}}^2})da_x$$

value $P_i$ corresponding to the target interval, where the first formula is: , where an integral variable is $a_x$, $a_x$ is any value in an interval from $a_{x1} + i \times \delta_{a_{x1}}$ to $a_{x1} + (i-1) \times \delta a_{x1}$, an integral interval of the first formula is $[a_{x1} + i \times \delta_{a_{x1}}, a_{x1} + (i-1) \times \delta_{a_{x1}}]$, an integrand is $\frac{1}{\sqrt{2\pi}\delta_{a_{x1}}}\exp(-\frac{(a_x - a_{x1})^2}{2\delta_{a_{x1}}^2})$ , and $\exp(-\frac{(a_x - a_{x1})^2}{2\delta_{a_{x1}}^2})$

is a $(-\frac{(a_x - a_{x1})^2}{2\delta_{a_{x1}}^2})^{th}$ power of e .

If determining that i is any integer greater than $-k$ and less than 0, the vehicle may determine, according to a second formula, the target probability value $P_i$ corresponding to the target interval, where the second formula is:

$$P_i = \int_{a_{x1}+i\times\delta_{a_{x1}}}^{a_{x1}+(i+1)\times\delta_{a_{x1}}} \frac{1}{\sqrt{2\pi}\delta_{a_{x1}}} \exp(-\frac{(a_x - a_{x1})^2}{2\delta_{a_{x1}}^2})da_x$$ , where $a_x$ is any value in an interval from $a_{x1} + (i+1) \times \delta_{a_{x1}}$ to $a_{x1} + i \times \delta_{a_{x1}}$, an integral interval of the second formula is $[a_{x1} + (i+1)\times\delta_{a_{x1}}, a_{x1} + i\times\delta_{a_{x1}}]$, an integral variable is $a_x$, an integrand

is $\frac{1}{\sqrt{2\pi}\delta_{a_{x1}}}\exp(-\frac{(a_x - a_{x1})^2}{2\delta_{a_{x1}}^2})$ , and $\exp(-\frac{(a_x - a_{x1})^2}{2\delta_{a_{x1}}^2})$ is a $(-\frac{(a_x - a_{x1})^2}{2\delta_{a_{x1}}^2})^{th}$ power of e .

If determining that i is equal to $-k-1$, the vehicle may determine, according to a third formula, the target probability value $P_i$ corresponding to the target interval, where the third formula is:

$$P_i = \int_{a_{x\min}}^{a_{x1}-k\times\delta_{ax1}} \frac{1}{\sqrt{2\pi}\delta_{a_{x1}}} \exp(-\frac{(a_x - a_{x1})^2}{2\delta_{a_{x1}}^2}) da_x$$

, where $a_x$ is any value in an interval from $a_{x1}$ -k $\times \delta_{a_{x1}}$ to $a_{x\,\min}$,

$$a_{x\min} = -\sqrt{a_{\max}^2 - a_{y1}^2}$$

, $a_{\max}$ represents a maximum acceleration of the vehicle 402, $a_{\max}$ in this embodiment is less than a gravitational acceleration g, g=9.8 m/s$^2$, and $a_{y1}$ is a longitudinal acceleration of the vehicle 402 at the current moment; an integral interval of the third formula is $[a_{x1}$ -k-$\times\delta_{ax1}, a_{xmin}]$, an integral variable is $a_x$, an integrand is

$$\frac{1}{\sqrt{2\pi}\delta_{a_{x1}}}\exp(\frac{(a_x - a_{x1})^2}{2\delta_{a_{x1}}^2})$$ , and $$\exp(-\frac{(a_x - a_{x1})^2}{2\delta_{a_{x1}}^2})$$ is a $$(-\frac{(a_x - a_{x1})^2}{2\delta_{a_{x1}}^2})^{th}$$ power of e.

If determining that i is equal to $k + 1$, the vehicle may determine, according to a fourth formula, the target probability value $P_i$ corresponding to the target interval, where the fourth formula is:

$$P_i = \int_{a_{x1}+k\times\delta_{ax1}}^{a_{x\max}} \frac{1}{\sqrt{2\pi}\delta_{a_{x1}}} \exp(-\frac{(a_x - a_{x1})^2}{2\delta_{a_{x1}}^2}) da_x$$

, where $a_x$ is any value in an interval from $a_{xmax}$ to $a_{x1} + k \times \delta_{ax1}$,

$$a_{x\max} = \sqrt{a_{\max}^2 - a_{y1}^2}$$

, an integral interval of the fourth formula is $[a_{xmax}, a_{x1} + k \times \delta_{ax1}]$, an integral variable is $a_x$,

an integrand is $$\frac{1}{\sqrt{2\pi}\delta_{a_{x1}}}\exp(-\frac{(a_x - a_{x1})^2}{2\delta_{a_{x1}}^2})$$ , and $$\exp(-\frac{(a_x - a_{x1})^2}{2\delta_{a_{x1}}^2})$$ is a $$(-\frac{(a_x - a_{x1})^2}{2\delta_{a_{x1}}^2})^{th}$$ power of e.

When obtaining the target probability value $P_i$ corresponding to the target interval, the vehicle can determine that the target probability value corresponding to the target discrete value obtained by sampling in the target interval is also $P_i$ . In this case, the vehicle can create a parameter sequence, where the parameter sequence includes a discrete value obtained by performing sampling in any one of 2( $k$+1) intervals obtained after a lateral acceleration of the vehicle 402 is discretized and a corresponding target probability value. Specifically, the parameter sequence in this embodiment is S={($a_{x\_sample[-k-1]}$, $P_{-k-1}$), ($a_{x\_sample[-k]}$, $P_{-k}$), ..., ($a_{x\_sample[i]}$, $P_i$), ..., ($a_{x\_sample[k]}$, $P_k$), ($a_{x\_sample[k+1]}$, $P_{k+1}$)}, where $a_{x\_sample[i]}$ represents a discrete value obtained by performing sampling by the vehicle in an i$^{th}$ interval in the 2( $k$+1) intervals, and $P_i$ represents a target probability value corresponding to the i$^{th}$ interval.

Step 1003: The vehicle predicts, based on the target discrete value and the target status information, a target movement track corresponding to the target discrete value.

For details about a specific execution process of step 1003 in this embodiment, refer to step 303 shown in FIG. 3. The specific execution process is not described again in this embodiment.

Step 1004: The vehicle performs, according to a sixth formula, attenuation processing on a target probability value corresponding to the target track point, to obtain a target probability value after the attenuation processing.

Specifically, FIG. 8 is used as an example. Accuracy of a track point included in the target movement track that is obtained by the vehicle by performing prediction on the target moving object is gradually reduced with time. If the accuracy of the track point estimated by the vehicle is higher, it indicates that a probability that the track point belongs to a road region in which the target moving object travels at the subsequent moment is higher. If the accuracy of the track point estimated by the vehicle is lower, it indicates that a probability that the track point belongs to the road region in which the target moving object travels at the subsequent moment is lower.

Still referring to FIG. 8, accuracy of estimating a track point ($x_{t0+n\Delta t}$, $y_{t0+n\Delta t}$) by the vehicle is lower than accuracy of estimating a track point ($x_{t0+n\Delta t}$, $y_{t0+n\Delta t}$) by the vehicle.

Based on a characteristic that accuracy of a track point is reduced with time, in this embodiment, the vehicle may perform attenuation processing on the target track point included in the predicted target movement track. The following describes in detail a specific process of performing attenuation processing on the target track point by the vehicle.

Using the target track point ($x_{t0+n\Delta t}$, $y_{t0+n\Delta t}$) as an example, the vehicle may first query the parameter sequence for a target probability value corresponding to the target track point. Specifically, the vehicle may obtain a target movement track to which the target track point belongs, so as to determine a target probability value P, that is corresponding to the target movement track and that is in the parameter sequence.

The vehicle can perform, according to the sixth formula, attenuation processing on the target probability value P, corresponding to the target track point $(x_{t_0+n\Delta t}, y_{t_0+n\Delta t})$ to obtain a target probability value $P(x_{t_0+n\Delta t}, y_{t_0+n\Delta t})$ after the attenuation processing.

The sixth formula is $P(x_{t_0+n\Delta t}, y_{t_0+n\Delta t}) = \lambda^n \times P_i$, where A is an attenuation factor prestored by the vehicle, that is, A is a preset value stored by the vehicle. A specific value of A is not limited in this embodiment. Specifically, to perform attenuation for a track point included in a target track line, A in this embodiment may be any value from 0 to 1.

When the vehicle determines, based on the sixth formula, the target probability value $P(x_{t_0+n\Delta t}, y_{t_0+n\Delta t})$ obtained after the attenuation processing, the vehicle may determine that the target probability value corresponding to the target track point is the target probability value $P(x_{t_0+n\Delta t}, y_{t_0+n\Delta t})$ obtained after the attenuation processing.

By using the sixth formula in this embodiment, the vehicle can perform attenuation processing on a target probability value corresponding to coordinates of each track point included in the target movement track of the target moving object.

It can be learned that the vehicle performs attenuation processing on a probability of any track point included in the target movement track, to effectively improve accuracy of the any track point included in the target movement track. In this way, the track point predicted by the vehicle can more accurately reflect a movement track of the target moving object at the subsequent moment.

Optionally, when the vehicle predicts the movement track of the moving object at the subsequent moment, there is a target track point that satisfies a first preset condition. The following describes a case of the target track point that satisfies the first preset condition.

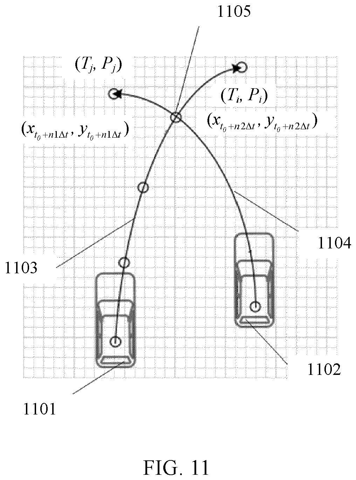

The first preset condition in this embodiment is that the target track point is located in different movement tracks. Using FIG. 11 as an example, the vehicle performs prediction on a first moving object 1101 to obtain a first target movement track 1103, and performs prediction on a second moving object 1102 to obtain a second target movement track 1104. As shown in FIG. 11, there is an overlap between spatial positions in the first target movement track 1103 and the second target movement track 1104, an intersection point in the overlap region is an intersection point 1105 shown in FIG. 11, the intersection point 1105 is an (n1)th track point in the first target movement track 1103, and the intersection point 1105 is an (n2)th track point in the second target movement track 1104. It can be seen that, the intersection point 1105 in this embodiment is located in both the first target movement track 1103 and the second target movement track 1104.

It can be learned that, if the intersection point 1105 shown in FIG. 11 is the target track point that satisfies the first preset condition, the vehicle may obtain a first probability value and a second probability value that are corresponding to the intersection point 1105. If the vehicle has performed attenuation processing on the first target movement track 1103 based on the foregoing description, the first probability value is a target probability value that is corresponding to the intersection point 1105 in the first target movement track 1103 and that is obtained after the vehicle performs attenuation processing on the first target movement track 1103. If the vehicle has performed attenuation processing on the second target movement track 1104 based on the foregoing description, the second probability value is a target probability value that is corresponding to the intersection point 1105 in the second target movement track 1104 and that is obtained after the vehicle performs attenuation processing on the second target movement track 1104.

Optionally, if the vehicle does not perform attenuation processing on the target tracks, the first probability value is a target probability value corresponding to the first target movement track 1103 of the vehicle, and the second probability value is a target probability value corresponding to the second target movement track 1104 of the vehicle.

Using FIG. 11 as an example, the vehicle may determine the first probability value $P_i(x_{t_0+n1\Delta t}, y_{t_0+n1\Delta t})$ and the second probability value $P_j(x_{t_0+n2\Delta t}, y_{t_0+n2\Delta t})$ that are corresponding to the intersection point 1105. In this case, the vehicle may determine, in the following manner, a target probability value P(x, y) corresponding to the intersection point 1105, where $P(x, y) = \max((P_i(x_{t_0+n1\Delta t}, y_{t_0+n1\Delta t}), P_j(x_{t_0+n2\Delta t}, y_{t_0+n2\Delta t})))$, that is, the target probability value P(x, y) corresponding to the intersection point 1105 is the larger of the first probability value $P_i(x_{t_0+n1\Delta t}, y_{t_0+n1\Delta t})$ and the second probability value $P_j(x_{t_0+n2\Delta t}, y_{t_0+n2\Delta t})$ that are corresponding to the intersection point 1105.

In the foregoing description, an example in which the target track point is an intersection point between two movement tracks is used for description. In another embodiment, the target track point may alternatively be an intersection point among more than two movement tracks, provided that the vehicle can determine a probability value corresponding to the target track point in each of the plurality of movement tracks to determine a maximum value among a plurality of probability values as the target probability value.

Optionally, in this embodiment, the vehicle may correct, based on a historical movement track, a target probability value of a track point included in the target movement track, to improve accuracy of an obtained target probability value. Specifically, before performing step 1004, in a process of performing step 1004, or after performing step 1004, the vehicle may perform a process of correcting, based on the historical movement track, the target probability value of the track point included in the target movement track.

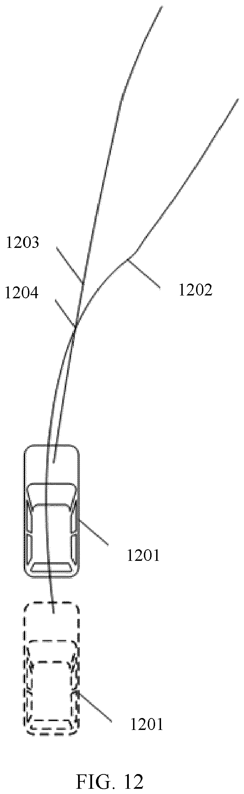

Referring to FIG. 7, it can be learned from the foregoing description that FIG. 7 is a schematic diagram of distribution of 2( $k$+1) movement tracks obtained by the vehicle by performing prediction on the target moving object at the current moment, and the vehicle further has stored $2(k+1)$ historical movement tracks obtained by performing prediction on the target moving object at a historical moment, where the historical moment is a previous moment of the current moment. Using FIG. 12 as an example, the vehicle may obtain a historical movement track 1202 by performing prediction on the target moving object 1201 at the historical moment, and may obtain the target movement track 1203 by performing prediction on the target moving object 1201 at the current moment, the historical movement track 1202 and the target movement track 1203 intersect at an intersection point 1204, and the intersection point 1204 is a target track point that satisfies a second preset condition. Specifically, as shown in FIG. 12, the second preset condition is that the target track point 1204 is located in both the target moving object 1201 and the historical movement track 1202.

The vehicle can obtain a first probability value $P_{C1}(x, y)$ and a second probability value $P_{H1}(x, y)$ that are corresponding to the target track point 1204, where the first probability value $P_{C1}(x, y)$ is a probability value that is corresponding to the target track point and that is obtained by performing prediction on the target moving object 1201 at the current moment, and the second probability value $P_{H1}(x, y)$ is a probability value that is corresponding to the target track point and that is obtained by performing prediction on the target moving object 1201 at the historical moment.

The vehicle determines, based on the first probability value $P_{C1}(x, y)$ and the second probability value $P_{H1}(x, y)$, a target probability value $P(x, y) = \max(P_{C1}(x, y), P_{H1}(x, y))$ corresponding to the target track point, that is, the target probability value is the larger of the first probability value and the second probability value.

Based on the foregoing description, the vehicle can perform overlay processing on a probability value of any track point included in the target movement track predicted at the current moment and the historical movement track predicted at the historical moment, to obtain the target probability value corresponding to the target track point, so as to improve accuracy of the target probability value corresponding to the target track point predicted by the vehicle.

Step 1005: The vehicle obtains a target track point that satisfies a regression fitting condition.

It can be learned that the vehicle may determine, by using step 1004, a target probability value corresponding to any track point (target track point) included in the target movement track. If the target probability value is larger, it indicates that the target track point is more likely to belong to the road region of the target moving object at the subsequent moment; and if the target probability value is smaller, it indicates that the target track point is less likely to belong to the road region of the target moving object at the subsequent moment.

According to the method in this embodiment, to remove a track point that is less likely to belong to the road region, thereby improving reliability of a road region in which the vehicle travels at the subsequent moment and that is estimated by the vehicle, the vehicle may perform filtering on each track point included in the target movement track. In this way, a track point that is more likely to belong to the road region is reserved.

The following describes a manner in which the vehicle performs filtering on each track point included in the target movement track.

When the vehicle obtains a target probability value corresponding to a target track point, and if the target probability value is greater than or equal to a preset probability value, the vehicle determines that the target track point satisfies the regression fitting condition, where the target track point that satisfies the regression fitting condition is used to estimate the road region in which the target moving object travels at the subsequent moment; or if the target probability value is less than a preset probability value, the vehicle may determine that the target track point does not satisfy the regression fitting condition, so that the target track point that does not satisfy the regression fitting condition is not used to estimate the road region in which the target moving object travels at the subsequent moment. A specific value of the preset probability value $P_{threshold}$ is not limited in this embodiment, provided that the target track point corresponding to the target probability value belongs to the road region when the target probability value is greater than or equal to the preset probability value $P_{threshold}$.

Specifically, description is provided with reference to the following formula. For example, coordinates of the target track point are $(x, y)$. When the target probability value corresponding to the target track point satisfies $P(x, y) \geq P_{threshold}$, the target track point $(x, y)$ satisfies the regression fitting condition; or when the target probability value corresponding to the target track point satisfies $P(x, y) < P_{threshold}$, the target track point $(x, y)$ does not satisfy the regression fitting condition.

Step 1006: The vehicle performs regression fitting based on the target track point that satisfies the regression fitting condition, to obtain the road region in which the target moving object travels at the subsequent moment.

By using step 1005, the vehicle performs filtering on all the track points included in the target movement track. For example, a target movement track obtained after the filtering may be as follows.

$T_i = \{(x_{sample1}, y_{sample1}), (x_{sample2}, y_{sample2}), ..., (x_{samplek}, y_{samplek}), ..., (x_{samplen}, y_{samplen})\}$ where $1 \leq k \leq n$, a track point $(x_{sample1}, y_{sample1})$, a track point $(x_{sample2}, y_{sample2})$, ..., and a track point $(x_{samplen}, y_{samplen})$ included in the target movement track all satisfy the regression fitting condition. It can be learned that the track points included in the target movement track obtained after the vehicle performs filtering on the target movement track are relatively dispersedly distributed. In this case, the vehicle cannot estimate, based on the scattered target track points included in the target movement track, a road region in which the vehicle can travel. Therefore, to improve accuracy of the road region in which the vehicle can travel and that is estimated by the vehicle, the vehicle may process, by using a regression fitting method, the track points that are included in the target movement track and that satisfy the regression fitting condition.

The following describes, by using an example, a manner in which the vehicle performs regression fitting on the track points that are included in the target movement track and that satisfy the regression fitting condition.

A specific regression fitting manner is not limited in this embodiment, provided that the vehicle can predict a target reference line based on the target movement track, making the vehicle predict, based on the target reference line, the road region in which the target moving object travels at the subsequent moment.

In this embodiment, an example in which the vehicle determines the target reference line by using a generalized regression neural network (general regression neural network, GRNN) is used for description. To be specific, in this embodiment, regression fitting is performed, by using the GRNN, on the scattered track points included in the target movement track to form the target reference line.

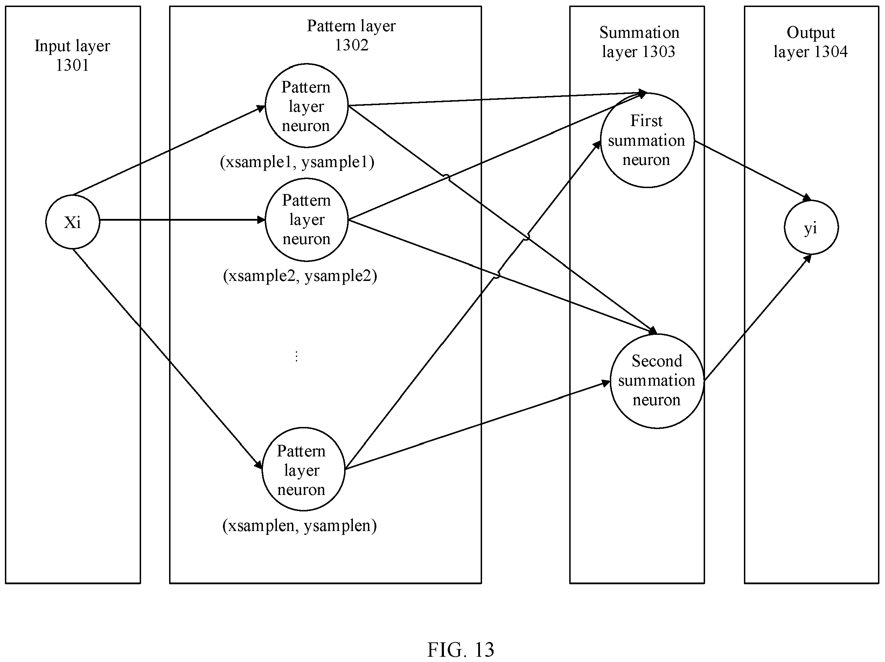

Specifically, the vehicle may train, based on a GRNN network structure shown in FIG. 13, the track points that are included in the target movement track and that satisfy the regression fitting condition, to obtain the target reference line.

In this embodiment, an example in which regression fitting is performed by using the GRNN network structure is used for description. In this case, the GRNN in this embodiment uses, as learning samples, the track points that are included in the target movement track and that satisfy the regression fitting condition. Because the GRNN has a quite strong nonlinear mapping capability, a regression effect is still quite good when there is a small amount of sample data. Therefore, accuracy of a predicted movement track of the target moving object at the subsequent moment can be improved by using the GRNN.

The following first describes a specific structure of the GRNN network structure. The GRNN network structure in this embodiment includes four layers of networks. A first layer of network is an input layer 1301, a second layer of network is a pattern layer 1302, a third layer of network is a summation layer 1303, and a fourth layer of network is an output layer 1304.

Based on the target movement track $T_i = \{(x_{sample1}, y_{sample1}), (x_{sample2}, y_{sample2}), ..., (x_{samplek}, y_{samplek}), ..., (x_{samplen}, y_{samplen})\}$, the vehicle may generate an input vector. An element included in the input vector in this embodiment is a horizontal coordinate $x_{samplek}$ of a target track point included in the target movement track, and a dimension of the input vector is 1.

The pattern layer 1302 includes a plurality of pattern layer neurons, and a quantity of pattern layer neurons included at the pattern layer 1302 is equal to a quantity of track points included in the target movement track. For example, the target movement track in this embodiment includes n track points, and in this case, the pattern layer 1302 also includes n pattern layer neurons. To be specific, the vehicle creates a correspondence between different pattern layer neurons and different track points included in the target movement track, so that the input layer 1301 can input any element included in the input vector to a corresponding pattern layer neuron.

Specifically, the vehicle may input any element $x_{samplek}$ included in the input vector to a $k^{th}$ pattern layer neuron included at the pattern layer 1302, and the $k^{th}$ pattern layer neuron performs calculation on $x_{samplek}$ by using a pattern neuron transfer function, to obtain a pattern neuron output parameter $p_k$.

Specifically, the pattern neuron transfer function is:

$$p_k = \exp\left[-\frac{(x_i - x_{samplek})^2}{2\sigma^2}\right]$$

, where $x_i$ is any value within a target range, a minimum value in the target range is a minimum value among horizontal coordinates of a track point $(x_{sample1}, y_{sample1})$, a track point $(x_{sample2}, y_{sample2})$, ..., and a track point $(x_{samplen}, y_{samplen})$ included in the target movement track, and a maximum value in the target range is a maximum value among the horizontal coordinates of the track point $(x_{sample1}, y_{sample1})$, the track point $(x_{sample2}, y_{sample2})$, ..., and the track point $(x_{samplen}, y_{samplen})$ included in the target movement track. $x_i$ with different values may be selected for the pattern neuron transfer function for different pattern layer neurons in this embodiment.

The vehicle may input, to both a first summation neuron and a second summation neuron, a pattern neuron output parameter that is output by any pattern layer neuron included at the pattern layer 1302.

Specifically, the first summation neuron performs calculation based on a first summation function to generate a first target parameter $S_D$, where the first summation function is:

$$S_D = \sum_{k=1}^{n} M1p_k$$

. It can be learned that the first summation neuron in this embodiment may perform arithmetic summation on output parameters $p_k$ output by all the pattern layer neurons, where M1 is a connection weight between the first summation neuron and each pattern layer neuron. In this embodiment, an example in which the connection weight M1 of the first summation neuron is 1 is used for description.

Specifically, the second summation neuron performs calculation based on a second summation function to generate a second target parameter $S_N$, where the second summation function is:

$$S_N = \sum_{k=1}^{n} \text{M2p}_k$$

. It can be learned that the second summation neuron in this embodiment may perform weighted summation on the output parameters $p_k$ output by all the pattern layer neurons, where M2 is a connection weight between the second summation neuron and each pattern layer neuron. In this embodiment, an example in which the connection weighted value M2 of the second summation neuron is a vertical coordinate of each track point included in the target movement track is used for description.

The vehicle inputs the first target parameter $S_D$ and the second target parameter $S_N$ to the output layer, and

$$y_i = \frac{S_N}{S_D}$$

the output layer calculates an output parameter based on an output function, where the output function is .

It can be learned that in the GRNN network structure in this embodiment, a coordinate point sequence may be output, where the coordinate point sequence includes a plurality of coordinate points $(x_1, y_1)$, $(x_2, y_2)$, ..., and $(x_n, y_n)$. In this case, the vehicle can determine that a track line formed by the coordinate point sequence is the target reference line, so that the vehicle can determine, based on the target reference line, the road region in which the target moving object travels at the subsequent moment.

For details about a specific process in which the vehicle determines, based on the target reference line formed by the coordinate point sequence, the road region in which the vehicle travels at the subsequent moment, refer to the specific process in which the vehicle determines the road region based on the target movement track in the embodiment shown in FIG. 3. Details are not described again.

Beneficial effects of using the driving road estimation method in this embodiment are as follows.

According to the method in this embodiment, the vehicle obtains the target status information of the target moving object at the current moment; the vehicle directly performs, without relying on a current driving environment, discretization processing on the target status information to obtain the parameter sequence, and then can obtain the target movement track based on the parameter sequence; and the vehicle can estimate, by performing calculation on the target movement track, the road region in which the vehicle travels at the subsequent moment. In a process of obtaining the road region, based on a characteristic that the target probability value gradually deviates from a true value with time, each target probability value is multiplied by a corresponding time attenuation factor $\lambda$, so as to obtain a relatively accurate road region of the target moving object at the subsequent moment. The vehicle performs estimation based on the road region of the target moving object at the subsequent moment, to accurately obtain the road region of the vehicle at the subsequent moment, thereby improving accuracy and robustness of estimating the road region in which the vehicle travels at the subsequent moment. This provides a safety assurance for autonomous driving.

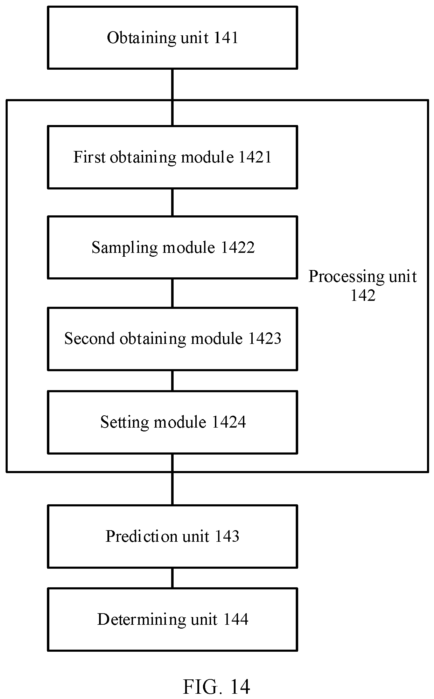

With reference to FIG. 14, the following describes, by using an example, a specific structure of a driving road estimation system provided in an embodiment.

As shown in FIG. 14, the driving road estimation system includes an obtaining unit 141, a processing unit 142, a prediction unit 143, and a determining unit 144.

The obtaining unit 141 is configured to obtain target status information of a target moving object at a current moment, where the target moving object is any one of at least one moving object around the vehicle, and the target status information includes a lateral acceleration of the target moving object.

The processing unit 142 is configured to perform discretization processing on the target status information to obtain a parameter sequence, where the parameter sequence includes a plurality of discrete values.

Specifically, the processing unit 142 includes:

a first obtaining module 1421, configured to set that the target status information satisfies a target Gaussian distribution $N(a_{x1}, \delta^2_{a_{x1}})$, where an expectation of the target Gaussian distribution is the lateral acceleration $a_{x1}$, a variance of the target Gaussian distribution is $\delta^2_{a_{x1}}$, and the variance $\delta^2_{a_{x1}}$ represents a discrete degree of the target Gaussian distribution $N(a_{x1}, \delta^2_{a_{x1}})$; and the target status information satisfying the target Gaussian distribution $N(a_{x1}, \delta^2_{a_{x1}})$ is discretized into $2(k+1)$ intervals, where $k$ is a preset discretization coefficient;

a sampling module 1422, configured to perform sampling in a target interval to obtain a target discrete value, where the target interval is any one of the $2(k+1)$ intervals obtained after discretization;

a second obtaining module 1423, configured to obtain a target probability value corresponding to the target discrete value, where the target probability value corresponding to the target discrete value is equal to an area of the target interval; and

a setting module 1424, configured to set the target discrete value and the target probability value corresponding to the target discrete value in the parameter sequence.

The prediction unit 143 is configured to predict, based on the target discrete value and the target status information, a target movement track corresponding to the target discrete value, where the target discrete value is any one of the plurality of discrete values included in the parameter sequence.

If the target status information further includes a lateral velocity $v_{x_1}$ of the target moving object and a longitudinal velocity $v_{y_1}$ of the target moving object, the prediction unit 143 is specifically configured to: determine, according to a fifth formula, coordinates $(x_{t_0+n\Delta t}, y_{t_0+n\Delta t})$ of a target track point included in the target movement track, where the target track point is an $n^{th}$ track point in a plurality of track points included in the target movement track, $t_0$ is the current moment, $\Delta t$ is a predicted time step, and n is a positive integer greater than or equal to 0;

the fifth formula is

$$\begin{cases} x_{t_0} = x_1 \\ y_{t_0} = y_1 \end{cases} ;$$

and

$$\begin{cases} x_{t_0+n\Delta t} = x_1 + v_{x_1} n\Delta t + \dfrac{1}{2} a_{x\_sample}[\mathrm{i}](n\Delta t)^2 \\ y_{t_0+n\Delta t} = y_1 + v_{y_1} n\Delta t + \dfrac{1}{2} a_{y1}(n\Delta t)^2 \end{cases} ,$$

where

$a_{y1}$ is a longitudinal acceleration of the target moving object included in the target status information, and $a_{x\_sample}[i]$ is the target discrete value.

The determining unit 144 is configured to determine, based on the target movement track, a road region in which the target moving object travels at a subsequent moment.

For details about a specific process and beneficial effects of performing a driving road estimation method by the driving road estimation system in this embodiment, refer to the embodiment shown in FIG. 3. Details are not described in this embodiment again.

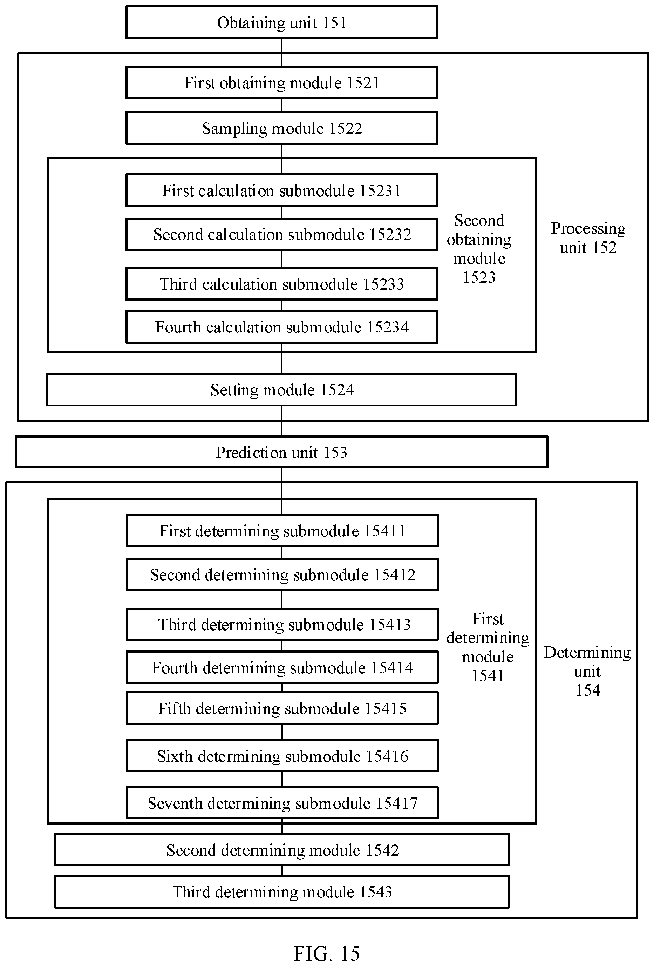

Based on the embodiment shown in FIG. 14, the driving road estimation system can predict a road occupancy map of each target moving object at the subsequent moment. With reference to an embodiment shown in FIG. 15, the following describes a specific process in which the driving road estimation system improves accuracy of a road region, predicted by the driving road estimation system, at a subsequent moment.

As shown in FIG. 15, the driving road estimation system includes an obtaining unit 151, a processing unit 152, a prediction unit 153, and a determining unit 154.

The obtaining unit 151 is configured to obtain target status information of a target moving object at a current moment, where the target moving object is any one of at least one moving object around a vehicle, and the target status information includes a lateral acceleration of the target moving object.

The processing unit 152 is configured to perform discretization processing on the target status information to obtain a parameter sequence, where the parameter sequence includes a plurality of discrete values.

Specifically, the processing unit 152 includes a first obtaining module 1521, a sampling module 1522, a second obtaining module1523, and a setting module 1524.

The first obtaining module 1521 is configured to set that the target status information satisfies a target Gaussian distribution $N(a_{x1}, \delta^2_{a_{x1}})$, where an expectation of the target Gaussian distribution is the lateral acceleration $a_{x1}$, a variance of the target Gaussian distribution is $\delta^2_{a_{x1}}$, and the variance $\delta^2_{a_{x1}}$ represents a discrete degree of the target Gaussian

distribution $N(a_{x1}, \delta_{a_{x1}}^2)$ ; and the target status information satisfying the target Gaussian distribution $N(a_{x1}, \delta_{a_{x1}}^2)$ is discretized into 2($k$+1) intervals, where $k$ is a preset discretization coefficient.

The sampling module 1522 is configured to perform sampling in a target interval to obtain a target discrete value, where the target interval is any one of the 2($k$+1) intervals obtained after discretization.

The second obtaining module 1523 is configured to obtain a target probability value corresponding to the target discrete value, where the target probability value corresponding to the target discrete value is equal to an area of the target interval.

Specifically, the second obtaining module 1523 specifically includes:

a first calculation submodule 15231, configured to: if i is any integer greater than 0 and less than or equal to $k$, determine, according to a first formula, the target probability value $P_i$ corresponding to the target discrete value,

$$P_i = \int_{a_{x1}+(i-1)\times\delta_{a_{x1}}}^{a_{x1}+i\times\delta_{a_{x1}}} \frac{1}{\sqrt{2\pi}\delta_{a_{x1}}} \exp(-\frac{(a_x - a_{x1})^2}{2\delta_{a_{x1}}^2})da_x$$

where the first formula is: , where an integral interval of the first formula is $[a_{x1}+i\times\delta_{a_{x1}}, a_{x1}+(i-1)\times\delta_{a_{x1}}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$ , and $\exp(-\frac{(a_x - a_{x1})^2}{2\delta_{a_{x1}}^2})$ is a $(-\frac{(a_x - a_{x1})^2}{2\delta_{a_{x1}}^2})^{\text{th}}$ power of e ;

a second calculation submodule 15232, configured to: if i is any integer greater than -$k$ and less than 0, determine, according to a second formula, the target probability value $P_i$ corresponding to the target discrete value, where the second formula is:

$$P_i = \int_{a_{x1}+i\times\delta_{a_{x1}}}^{a_{x1}+(i+1)\times\delta_{a_{x1}}} \frac{1}{\sqrt{2\pi}\delta_{a_{x1}}} \exp(-\frac{(a_x - a_{x1})^2}{2\delta_{a_{x1}}^2})da_x$$

, where an integral interval of the second formula is $\left[ a_{x1}+(i+1)\times\delta_{a_{x1}}, a_{x1}+i\times\delta_{a_{x1}} \right]$ , an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$ , and $\exp(-\frac{(a_x - a_{x1})^2}{2\delta_{a_{x1}}^2})$ is a $(-\frac{(a_x - a_{x1})^2}{2\delta_{a_{x1}}^2})^{\text{th}}$ power of e ;

a third calculation submodule 15233, configured to: if i is equal to -$k$-1, determine, according to a third formula, the target probability value $P_i$ corresponding to the target discrete value, where the third formula is:

$$P_i = \int_{a_{xmin}}^{a_{x1}-k\times\delta_{a_{x1}}} \frac{1}{\sqrt{2\pi}\delta_{a_{x1}}} \exp(-\frac{(a_x - a_{x1})^2}{2\delta_{a_{x1}}^2})da_x$$

, where $a_{xmin} = -\sqrt{a_{max}^2 - a_{y1}^2}$ , $a_{max}$ represents a maximum acceleration of the target moving object, an integral interval of the third formula is $\left[ a_{x1}-k\times\delta_{a_{x1}}, a_{xmin} \right]$ , an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$ , and $\exp(-\frac{(a_x - a_{x1})^2}{2\delta_{a_{x1}}^2})$ is a $(-\frac{(a_x - a_{x1})^2}{2\delta_{a_{x1}}^2})^{\text{th}}$ power of e; or

a fourth calculation submodule 15234, configured to: if i is equal to $k$ + 1, determine, according to a fourth formula, the target probability value $P_i$ corresponding to the target discrete value, where the fourth formula is:

$$P_i = \int_{a_{x1}+k\times\delta_{a_{x1}}}^{a_{x\max}} \frac{1}{\sqrt{2\pi}\delta_{a_{x1}}} \exp(-\frac{(a_x - a_{x1})^2}{2\delta_{a_{x1}}^2})da_x$$

, where $a_{x\max} = \sqrt{a_{\max}^2 - a_{y1}^2}$ , an integral interval of the fourth formula is $[a_{x\max}, a_{x1}+k\times\delta_{a_{x1}}]$, an integral variable is $a_x$, an integrand is $\frac{1}{\sqrt{2\pi}\delta_{a_{x1}}} \exp(-\frac{(a_x - a_{x1})^2}{2\delta_{a_{x1}}^2})$ , and

$\exp(-\frac{(a_x - a_{x1})^2}{2\delta_{a_{x1}}^2})$ is a $(-\frac{(a_x - a_{x1})^2}{2\delta_{a_{x1}}^2})^{\text{th}}$ power of e .

The setting module 1524 is configured to set the target discrete value and the target probability value corresponding to the target discrete value in the parameter sequence.

The prediction unit 153 is configured to predict, based on the target discrete value and the target status information, a target movement track corresponding to the target discrete value, where the target discrete value is any one of the plurality of discrete values included in the parameter sequence.

If the target status information further includes a lateral velocity $v_{x1}$, of the target moving object and a longitudinal velocity $v_{y1}$, of the target moving object, the prediction unit 143 is specifically configured to: determine, according to a fifth formula, coordinates $(x_{t_0+n\Delta t}, y_{t_0+n\Delta t})$ of a target track point included in the target movement track, where the target track point is an $n^{\text{th}}$ track point in a plurality of track points included in the target movement track, $t_0$ is the current moment, $\Delta t$ is a predicted time step, and n is a positive integer greater than or equal to 0;

the fifth formula is

$$\begin{cases} x_{t_0} = x_1 \\ y_{t_0} = y_1 \end{cases} ;$$

and

$$\begin{cases} x_{t_0+n\Delta t} = x_1 + v_{x_1}n\Delta t + \frac{1}{2}a_{x\_sample}[\text{i}](n\Delta t)^2 \\ y_{t_0+n\Delta t} = y_1 + v_{y_1}n\Delta t + \frac{1}{2}a_{y1}(n\Delta t)^2 \end{cases} ,$$

where

$a_{y1}$ is a longitudinal acceleration of the target moving object included in the target status information, and $a_{x\_sample}[i]$ is the target discrete value.

The determining unit 154 is configured to determine, based on the target movement track, a road region in which the target moving object travels at a subsequent moment.

Specifically, the determining unit 154 includes a first determining module 1541, a second determining module 1542, and a third determining module 1543.

The first determining module 1541 is configured to obtain a target probability value corresponding to the target track point included in the target movement track, where the target probability value corresponding to the target track point is equal to the target probability value corresponding to the target discrete value.

Optionally, the first determining module 1541 specifically includes:

a first determining submodule 15411, configured to perform, according to a sixth formula, attenuation processing on a target probability value $P_i$ corresponding to the target track point $(x_{t_0+n\Delta t}, y_{t_0+n\Delta t})$ to obtain a target probability value $P(x_{t_0}, y_{t_0+n\Delta t})$ after the attenuation processing, where

the sixth formula is $P(x_{t_0+n\Delta t}, y_{t_0+n\Delta t}) = \lambda^n \times P_i$, where $\lambda$ is a preset value; and
a second determining submodule 15412, configured to determine that the target probability value corresponding to the target track point is the target probability value $P(x_{t_0+n\Delta t}, y_{t_0+n\Delta t})$ obtained after the attenuation processing.

Optionally, the first determining module 1541 specifically includes:

a third determining submodule 15413, configured to: if the target track point that satisfies a first preset condition is obtained, obtain a plurality of probability values corresponding to the target track point, where the first preset condition is that the target track point is located in different movement tracks; and
a fourth determining submodule 15414, configured to determine, as the target probability value corresponding to the target track point, a maximum value of probability values that are corresponding to the target track point in the different movement tracks.

Optionally, the first determining module 1541 further includes:

a fifth determining submodule 15415, configured to obtain a historical movement track that has been predicted for the target moving object at a historical moment;
a sixth determining submodule 15416, configured to: if the target track point that satisfies a second preset condition is obtained, obtain a first probability value and a second probability value that are corresponding to the target track point, where the second preset condition is that the target track point is located in both the target movement track and the historical movement track, the first probability value is a probability value that is corresponding to the target track point and that is obtained by performing prediction on the target moving object at the current moment, and the second probability value is a probability value that is corresponding to the target track point and that is obtained by performing prediction on the target moving object at the historical moment; and
a seventh determining submodule 15417, configured to determine the larger of the first probability value and the second probability value as the target probability value corresponding to the target track point.

The second determining module 1542 is configured to obtain a target track point that satisfies a regression fitting condition, where the target track point that satisfies the regression fitting condition is a track point corresponding to a target probability value greater than or equal to a preset probability value.

The third determining module 1543 is configured to perform regression fitting based on the target track point that satisfies the regression fitting condition, to obtain the road region in which the target moving object travels at the subsequent moment.

For details about a specific process and beneficial effects of performing a driving road estimation method by the driving road estimation system in this embodiment, refer to the embodiment shown in FIG. 10. Details are not described in this embodiment again.

This application further provides a computer-readable storage medium. The computer-readable storage medium includes an instruction. When the instruction is run on the central processing unit shown in FIG. 2, the central processing unit is enabled to perform the methods shown in FIG. 3 and FIG. 10. Specific execution processes are not described again.

This application further provides a computer program product including an instruction. When the computer program product is run on the central processing unit shown in FIG. 2, the central processing unit is enabled to perform the methods shown in FIG. 3 and FIG. 10. Specific execution processes are not described again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1.  A method for predicting a road occupancy map of a target moving object, comprising:

    obtaining (301) target status information of the target moving object at a current moment, wherein the target moving object is any one of at least one moving object around a vehicle, and the target status information comprises a lateral acceleration of the target moving object;
    performing (302) discretization processing on the target status information to obtain a parameter sequence, wherein the parameter sequence comprises a plurality of discrete values;
    predicting (303), based on a target discrete value and the target status information, a target movement track corresponding to the target discrete value, wherein the target discrete value is any one of the plurality of discrete values comprised in the parameter sequence, and the target movement track comprises a plurality of target track points;
    determining (304), based on the target movement track, a road region in which the target moving object travels at a subsequent moment, wherein the subsequent moment is a next moment of the current moment;
    **characterized in that** the determining comprises:

    obtaining a target probability value corresponding to each target track point comprised in the target movement track, wherein the target probability value corresponding to the target track point is equal to the target probability value corresponding to the target discrete value;
    obtaining a target track point that satisfies a regression fitting condition, wherein the target track point that satisfies the regression fitting condition is a track point corresponding to a target probability value greater than or equal to a preset probability value; and
    performing regression fitting based on the target track point that satisfies the regression fitting condition, to obtain the road region in which the target moving object travels at the subsequent moment.

2.  The method according to claim 1, wherein the performing discretization processing on the target status information to obtain a parameter sequence comprises:

    setting that the target status information satisfies a target Gaussian distribution $N\left(a_{x1}, \delta_{a_{x1}}^{2}\right)$, wherein an expectation of the target Gaussian distribution is the lateral acceleration $a_{x1}$, a variance of the target Gaussian distribution is $\delta_{a_{x1}}^{2}$, and the variance $\delta_{a_{x1}}^{2}$ represents a discrete degree of the target Gaussian distribution $N\left(a_{x1}, \delta_{a_{x1}}^{2}\right)$; and the target status information satisfying the target Gaussian distribution $N\left(a_{x1}, \delta_{a_{x1}}^{2}\right)$ is discretized into $2(k+1)$ intervals, wherein $k$ is a preset discretization coefficient;
    performing sampling in a target interval to obtain the target discrete value, wherein the target interval is any one of the $2(k+1)$ intervals obtained after discretization;
    obtaining a target probability value corresponding to the target discrete value, wherein the target probability value corresponding to the target discrete value is equal to an area of the target interval; and
    setting the target discrete value and the target probability value corresponding to the target discrete value in the parameter sequence.

3.  The estimation method according to claim 2, wherein when the target status information further comprises a longi-

tudinal acceleration $a_{y1}$ of the target moving object, and the target interval is an ith interval in the $2(k+1)$ intervals, the obtaining a target probability value corresponding to the target discrete value comprises:

if i is any integer greater than 0 and less than or equal to $k$, determining, according to a first formula, the target probability value $P_i$ corresponding to the target discrete value, wherein the first formula is:

$$P_i = \int_{a_{x1}+(i-1)^*\delta_{a_{x1}}}^{a_{x1}+i^*\delta_{a_{x1}}} \frac{1}{\sqrt{2\pi}\delta_{a_{x1}}} \exp(-\frac{(a_x - a_{x1})^2}{2\delta_{a_{x1}}^2}) da_x$$

, wherein an integral interval of the first formula is $[a_{x1}+i^*\delta_{a_{x1}},$ $a_{x1}+(i-1)^*\delta_{a_{x1}}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$, and $\exp(-\frac{(a_x - a_{x1})^2}{2\delta_{a_{x1}}^2})$ is a $(-\frac{(a_x - a_{x1})^2}{2\delta_{a_{x1}}^2})$th power of e ;

if i is any integer greater than $-k$ and less than 0, determining, according to a second formula, the target probability value $P_i$ corresponding to the target discrete value, wherein the second formula is:

$$P_i = \int_{a_{x1}+i^*\delta_{a_{x1}}}^{a_{x1}+(i+1)^*\delta_{a_{x1}}} \frac{1}{\sqrt{2\pi}\delta_{a_{x1}}} \exp(-\frac{(a_x - a_{x1})^2}{2\delta_{a_{x1}}^2}) da_x$$

, wherein an integral interval of the second formula is $[a_{x1}+(i+1)^*\delta_{a_{x1}},$ $a_{x1}+i^*\delta_{a_{x1}}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$, and $\exp(-\frac{(a_x - a_{x1})^2}{2\delta_{a_{x1}}^2})$ is a $(-\frac{(a_x - a_{x1})^2}{2\delta_{a_{x1}}^2})$th power of e ;

if i is equal to $-k-1$, determining, according to a third formula, the target probability value $P_i$ corresponding to the target discrete value, wherein the third formula is:

$$P_i = \int_{a_{x\min}}^{a_{x1}-k^*\delta_{a_{x1}}} \frac{1}{\sqrt{2\pi}\delta_{a_{x1}}} \exp(-\frac{(a_x - a_{x1})^2}{2\delta_{a_{x1}}^2}) da_x$$

, wherein $a_{x\min} = -\sqrt{a_{\max}^2 - a_{y1}^2}$, $a_{\max}$ represents a maximum acceleration of the target moving object, an integral interval of the third formula is $[a_{x1}-k^*\delta_{a_{x1}}, a_{x\min}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$, and $\exp(-\frac{(a_x - a_{x1})^2}{2\delta_{a_{x1}}^2})$ is a $(-\frac{(a_x - a_{x1})^2}{2\delta_{a_{x1}}^2})$th power of e ; or

if i is equal to $k + 1$ , determining, according to a fourth formula, the target probability value $P_i$ corresponding to the target discrete value, wherein the fourth formula is:

$$P_i = \int_{a_{x1}+k^*\delta_{a_{x1}}}^{a_{x\max}} \frac{1}{\sqrt{2\pi}\delta_{a_{x1}}} \exp(-\frac{(a_x - a_{x1})^2}{2\delta_{a_{x1}}^2}) da_x$$

, wherein $a_{x\max} = \sqrt{a_{\max}^2 - a_{y1}^2}$, an integral interval of the fourth formula is $[a_{x\max}, a_{x1} + k^*\delta_{a_{x1}}]$, an integral variable is $a_x$, an integrand is $\frac{1}{\sqrt{2\pi}\delta_{a_{x1}}}\exp(-\frac{(a_x - a_{x1})^2}{2\delta_{a_{x1}}^2})$, and $\exp(-\frac{(a_x - a_{x1})^2}{2\delta_{a_{x1}}^2})$ is a $(-\frac{(a_x - a_{x1})^2}{2\delta_{a_{x1}}^2})$th power of e .

4. The method according to any one of claims 1 to 3, wherein if the target status information further comprises a lateral velocity $v_{x1}$ of the target moving object and a longitudinal velocity $v_{y1}$ of the target moving object, the predicting, based on a target discrete value and the target status information, a target movement track corresponding to the target discrete value comprises:

determining, according to the fifth formula, coordinates $(x_{t0+n\Delta t}, y_{t0+n\Delta t})$ of a target track point comprised in the target movement track, wherein the target track point is an nth track point in a plurality of track points comprised in the target movement track, $t_0$ is the current moment, $\Delta t$ is a predicted time step, and n is a positive integer greater than or equal to 0;
the fifth formula is

$$\begin{cases} x_{t_0} = x_1 \\ y_{t_0} = y_1 \end{cases};$$

and

$$\begin{cases} x_{t_0+n\Delta t} = x_1 + v_{x_1} n\Delta t + \dfrac{1}{2} a_{x\_sample}[\mathrm{i}](n\Delta t)^2 \\ y_{t_0+n\Delta t} = y_1 + v_{y_1} n\Delta t + \dfrac{1}{2} a_{y1}(n\Delta t)^2 \end{cases},$$

wherein

$a_{y1}$ is the longitudinal acceleration of the target moving object comprised in the target status information, and $a_{x\_sample}[i]$ is the target discrete value.

5. The method according to claim 1, wherein the obtaining a target probability value corresponding to the target track point comprised in the target movement track further comprises:

performing, according to a sixth formula, attenuation processing on a target probability value $P_i$ corresponding to the target track point $(x_{t0+n\Delta t},\ y_{t0+n\Delta t})$ to obtain a target probability value $P(x_{t0+n\Delta t}, y_{t0+n\Delta t})$ after the attenuation processing, wherein

the sixth formula is $P(x_{t0+n\Delta t},\ y_{t0+n\Delta t}) = \lambda^n * P_i$, and $\lambda$ is a preset value; and

determining that the target probability value corresponding to the target track point is the target probability value $P(x_{t0+n\Delta t}, y_{t0+n\Delta t})$ obtained after the attenuation processing.

6. The method according to claim 1, wherein the obtaining a target probability value corresponding to the target track point comprised in the target movement track further comprises:

if the target track point that satisfies a first preset condition is obtained, obtaining a plurality of probability values corresponding to the target track point, wherein the first preset condition is that the target track point is located in different movement tracks; and

determining, as the target probability value corresponding to the target track point, a maximum value of probability values that are corresponding to the target track point in the different movement tracks.

7. The method according to claim 1, wherein the obtaining a target probability value corresponding to the target track point comprised in the target movement track further comprises:

obtaining a historical movement track that has been predicted for the target moving object at a historical moment, wherein the historical moment is a previous moment of the current moment;

if the target track point that satisfies a second preset condition is obtained, obtaining a first probability value and a second probability value that are corresponding to the target track point, wherein the second preset condition is that the target track point is located in both the target movement track and the historical movement track, the first probability value is a probability value that is corresponding to the target track point and that is obtained by performing prediction on the target moving object at the current moment, and the second probability value is a probability value that is corresponding to the target track point and that is obtained by performing prediction on the target moving object at the historical moment; and

determining the larger of the first probability value and the second probability value as the target probability value corresponding to the target track point.

8. A system for predicting a road occupancy map of a target moving object, comprising:

an obtaining unit (141), configured to obtain target status information of the target moving object at a current moment, wherein the target moving object is any one of at least one moving object around a vehicle, and the target status information comprises a lateral acceleration of the target moving object;

a processing unit (142), configured to perform discretization processing on the target status information to obtain a parameter sequence, wherein the parameter sequence comprises a plurality of discrete values;

a prediction unit (143), configured to predict, based on a target discrete value and the target status information, a target movement track corresponding to the target discrete value, wherein the target discrete value is any one of the plurality of discrete values comprised in the parameter sequence, and the target movement track comprises a plurality of target track ;

a determining unit (144), configured to determine, based on the target movement track, a road region in which the target moving object travels at a subsequent moment, wherein the subsequent moment is a next moment of the current moment;

**characterized in that** the determining unit comprises:

a first determining module, configured to obtain a target probability value corresponding to each target track point comprised in the target movement track, wherein the target probability value corresponding to the target track point is equal to the target probability value corresponding to the target discrete value;

a second determining module, configured to obtain a target track point that satisfies a regression fitting condition, wherein the target track point that satisfies the regression fitting condition is a track point corresponding to a target probability value greater than or equal to a preset probability value; and

a third determining module, configured to perform regression fitting based on the target track point that satisfies the regression fitting condition, to obtain the road region in which the target moving object travels at the subsequent moment.

9. The driving road estimation system according to claim 8, wherein the processing unit comprises:

a first obtaining module, configured to set that the target status information satisfies a target Gaussian distribution $N(a_{x1}, \delta_{a_{x1}}^2)$ , wherein an expectation of the target Gaussian distribution is the lateral acceleration $a_{x1}$, a variance of the target Gaussian distribution is $\delta_{a_{x1}}^2$ , and the variance $\delta_{a_{x1}}^2$ represents a discrete degree of the target Gaussian distribution $N(a_{x1}, \delta_{a_{x1}}^2)$ ; and the target status information satisfying the target Gaussian distribution $N(a_{x1}, \delta_{a_{x1}}^2)$ is discretized into $2(k+1)$ intervals, wherein $k$ is a preset discretization coefficient;

a sampling module, configured to perform sampling in a target interval to obtain the target discrete value, wherein the target interval is any one of the $2(k+1)$ intervals obtained after discretization;

a second obtaining module, configured to obtain a target probability value corresponding to the target discrete value, wherein the target probability value corresponding to the target discrete value is equal to an area of the target interval; and

a setting module, configured to set the target discrete value and the target probability value corresponding to the target discrete value in the parameter sequence.

10. The driving road estimation system according to claim 9, wherein when the target status information further comprises the longitudinal acceleration $a_{y1}$ of the target moving object, and the target interval is an ith interval in the $2(k+1)$ intervals, the second obtaining module specifically comprises:

a first calculation submodule, configured to: if i is any integer greater than 0 and less than or equal to $k$, determine, according to a first formula, the target probability value $P_i$ corresponding to the target discrete value, wherein the first formula is:

$$P_i = \int_{a_{x1}+(i-1)*\delta_{a_{x1}}}^{a_{x1}+i*\delta_{a_{x1}}} \frac{1}{\sqrt{2\pi}\delta_{a_{x1}}} \exp(-\frac{(a_x - a_{x1})^2}{2\delta_{a_{x1}}^2}) da_x$$

, wherein an integral interval of the first formula is $[a_{x1}+i*\delta_{a_{x1}},$ $a_{x1}+(i-1)*\delta_{a_{x1}}]$, an integral variable is $a_x$, an integrand is $\frac{1}{\sqrt{2\pi}\delta_{a_{x1}}} \exp(-\frac{(a_x - a_{x1})^2}{2\delta_{a_{x1}}^2})$ , and $\exp(-\frac{(a_x - a_{x1})^2}{2\delta_{a_{x1}}^2})$ is a $(-\frac{(a_x - a_{x1})^2}{2\delta_{a_{x1}}^2})$th power of e ;

a second calculation submodule, configured to: if i is any integer greater than -k and less than 0, determine, according to a second formula, the target probability value $P_i$ corresponding to the target discrete value, wherein the second formula is:

$$P_i = \int_{a_{x1}+i^*\delta_{a_{x1}}}^{a_{x1}+(i+1)^*\delta_{a_{x1}}} \frac{1}{\sqrt{2\pi}\delta_{a_{x1}}} \exp(-\frac{(a_x - a_{x1})^2}{2\delta_{a_{x1}}^2})da_x$$

, wherein an integral interval of the second formula is

$[a_{x1}+(i+1)^*\delta_{a_{x1}},\ a_{x1}+i^*\delta_{a_{x1}}]$, an integral variable is $a_x$, an integrand is $\frac{1}{\sqrt{2\pi}\delta_{a_{x1}}}\exp(-\frac{(a_x-a_{x1})^2}{2\delta_{a_{x1}}^2})$, and

$\exp(-\frac{(a_x - a_{x1})^2}{2\delta_{a_{x1}}^2})$ is a $(-\frac{(a_x - a_{x1})^2}{2\delta_{a_{x1}}^2})$th power of e ;

a third calculation submodule, configured to: if i is equal to -k-1, determine, according to a third formula, the target probability value $P_i$ corresponding to the target discrete value, wherein the third formula is:

$$P_i = \int_{a_{x\min}}^{a_{x1}-k^*\delta_{a_{x1}}} \frac{1}{\sqrt{2\pi}\delta_{a_{x1}}} \exp(-\frac{(a_x - a_{x1})^2}{2\delta_{a_{x1}}^2})da_x$$

, wherein $a_{x\min} = -\sqrt{a_{\max}^2 - a_{y1}^2}$ , $a_{\max}$ represents a maximum acceleration of the target moving object, an integral interval of the third formula is $[a_{x1} - k^*\delta_{ax_1},\ a_{x\min}]$, an integral

variable is $a_x$, an integrand is $\frac{1}{\sqrt{2\pi}\delta_{a_{x1}}}\exp(-\frac{(a_x-a_{x1})^2}{2\delta_{a_{x1}}^2})$ , and $\exp(-\frac{(a_x-a_{x1})^2}{2\delta_{a_{x1}}^2})$ is a $(-\frac{(a_x-a_{x1})^2}{2\delta_{a_{x1}}^2})$th power of

e ; or

a fourth calculation submodule, configured to: if i is equal to $k + 1$, determine, according to a fourth formula, the target probability value $P_i$ corresponding to the target discrete value, wherein the fourth formula is:

$$P_i = \int_{a_{x1}+k^*\delta_{a_{x1}}}^{a_{x\max}} \frac{1}{\sqrt{2\pi}\delta_{a_{x1}}} \exp(-\frac{(a_x - a_{x1})^2}{2\delta_{a_{x1}}^2})da_x$$

, wherein $a_{x\max} = \sqrt{a_{\max}^2 - a_{y1}^2}$ , an integral interval of the fourth formula is $[a_{x\max},\ a_{x1} + k^*\delta_{a_{x1}}]$, an integral variable is $a_x$, an integrand is $\frac{1}{\sqrt{2\pi}\delta_{a_{x1}}}\exp(-\frac{(a_x-a_{x1})^2}{2\delta_{a_{x1}}^2})$

, and $\exp(-\frac{(a_x-a_{x1})^2}{2\delta_{a_{x1}}^2})$ is a $(-\frac{(a_x-a_{x1})^2}{2\delta_{a_{x1}}^2})$th power of e.

11. The driving road estimation system according to claim 8, wherein if the target status information further comprises a lateral velocity $v_{x_1}$ of the target moving object and a longitudinal velocity $v_{y_1}$ of the target moving object, the prediction unit is specifically configured to: determine, according to a fifth formula, coordinates $(x_{t_0+n\Delta t},\ y_{t_0+n\Delta t})$ of a target track point comprised in the target movement track, wherein the target track point is an nth track point in a plurality of track points comprised in the target movement track, $t_0$ is the current moment, $\Delta t$ is a predicted time step, and n is a positive integer greater than or equal to 0;

the fifth formula is

$$\begin{cases} x_{t_0} = x_1 \\ y_{t_0} = y_1 \end{cases};$$

and

$$\begin{cases} x_{t_0+n\Delta t} = x_1 + v_{x_1} n\Delta t + \frac{1}{2}a_{x\_sample}[i](n\Delta t)^2 \\ y_{t_0+n\Delta t} = y_1 + v_{y_1} n\Delta t + \frac{1}{2}a_{y1}(n\Delta t)^2 \end{cases},$$

wherein

$a_{y1}$ is the longitudinal acceleration of the target moving object comprised in the target status information, and $a_{x\_sample}[i]$ is the target discrete value.

12. The driving road estimation system according to claim 8, wherein the first determining module comprises:

a first determining submodule, configured to perform, according to a sixth formula, attenuation processing on a target probability value $P_i$ corresponding to the target track point $(x_{t0+n\Delta t}, y_{t0+n\Delta t})$ to obtain a target probability value $P(x_{t0+n\Delta t}, y_{t0+n\Delta t})$ after the attenuation processing, wherein
the sixth formula is $P(x_{t0+n\Delta t}, y_{t0+n\Delta t}) = \lambda^n * P_i$, and $\lambda$ is a preset value; and
a second determining submodule, configured to determine that the target probability value corresponding to the target track point is the target probability value $P(x_{t0+n\Delta t}, y_{t0+n\Delta t})$ obtained after the attenuation processing.

13. The driving road estimation system according to claim 8, wherein the first determining module comprises:

a third determining submodule, configured to: if the target track point that satisfies a first preset condition is obtained, obtain a plurality of probability values corresponding to the target track point, wherein the first preset condition is that the target track point is located in different movement tracks; and
a fourth determining submodule, configured to determine, as the target probability value corresponding to the target track point, a maximum value of probability values that are corresponding to the target track point in the different movement tracks.

14. The driving road estimation system according to claim 8, wherein the first determining module comprises:

a fifth determining submodule, configured to obtain a historical movement track that has been predicted for the target moving object at a historical moment, wherein the historical moment is a previous moment of the current moment;
a sixth determining submodule, configured to: if the target track point that satisfies a second preset condition is obtained, obtain a first probability value and a second probability value that are corresponding to the target track point, wherein the second preset condition is that the target track point is located in both the target movement track and the historical movement track, the first probability value is a probability value that is corresponding to the target track point and that is obtained by performing prediction on the target moving object at the current moment, and the second probability value is a probability value that is corresponding to the target track point and that is obtained by performing prediction on the target moving object at the historical moment; and
a seventh determining submodule, configured to determine the larger of the first probability value and the second probability value as the target probability value corresponding to the target track point.

15. A computer-readable storage medium, comprising an instruction, wherein when the instruction is run on a processor, the processor is enabled to perform the method according to any one of claims 1 to 7.

**Patentansprüche**

1. Verfahren zum Vorhersagen einer Wegbelegungskarte eines sich bewegenden Zielobjektes, umfassend:

Erlangen (301) von Zielstatusinformationen des sich bewegenden Zielobjektes zu einem aktuellen Zeitpunkt, wobei das sich bewegende Zielobjekt ein beliebiges von mindestens einem sich bewegenden Objekt um ein Fahrzeug herum ist und die Zielstatusinformationen eine Querbeschleunigung des sich bewegenden Zielobjektes umfassen;
Durchführen (302) einer Diskretisierungsverarbeitung an den Zielstatusinformationen, um eine Parameterfolge zu erlangen, wobei die Parameterfolge eine Vielzahl von diskreten Werten umfasst;
Vorhersagen (303), basierend auf einem diskreten Zielwert und den Zielstatusinformationen, einer Zielbewegungsspur, die dem diskreten Zielwert entspricht, wobei der diskrete Zielwert ein beliebiger der Vielzahl von diskreten Werten ist, die in der Parametersequenz enthalten sind, und die Zielbewegungsspur eine Vielzahl von Zielspurpunkten umfasst;
Bestimmen (304), basierend auf der Zielbewegungsspur, eines Wegbereiches, in dem sich das sich bewegende Zielobjekt zu einem nachfolgenden Zeitpunkt bewegt, wobei der nachfolgende Zeitpunkt ein Zeitpunkt nach dem aktuellen Zeitpunkt ist;

**dadurch gekennzeichnet, dass** das Bestimmen Folgendes umfasst:

Erlangen eines Zielwahrscheinlichkeitswertes, der jedem in der Zielbewegungsspur enthaltenen Zielspurpunkt entspricht, wobei der Zielwahrscheinlichkeitswert, der dem Zielspurpunkt entspricht, gleich dem Zielwahrscheinlichkeitswert ist, der dem diskreten Zielwert entspricht;

Erlangen eines Zielspurpunkts, der eine Regressionsanpassungsbedingung erfüllt, wobei der Zielspurpunkt, der die Regressionsanpassungsbedingung erfüllt, ein Spurpunkt ist, der einem Zielwahrscheinlichkeitswert entspricht, welcher größer als oder gleich einem zuvor festgelegten Wahrscheinlichkeitswert ist; und

Durchführen einer Regressionsanpassung basierend auf dem Zielspurpunkt, der die Regressionsanpassungsbedingung erfüllt, um den Wegbereich zu erlangen, in dem sich das sich bewegende Zielobjekt zu dem nächsten Zeitpunkt bewegt.

2. Verfahren nach Anspruch 1, wobei das Durchführen einer Diskretisierungsverarbeitung an den Zielstatusinformationen, um eine Parameterfolge zu erlangen, Folgendes umfasst:

Festlegen, dass die Zielstatusinformationen eine Zielnormalverteilung $N(a_{x1}, \delta_{a_{x1}}^2)$ erfüllen, wobei eine Erwartung der Zielnormalverteilung die Querbeschleunigung $a_{x1}$ ist, eine Varianz der Zielnormalverteilung $\delta_{a_{x1}}^2$ ist und die Varianz $\delta_{a_{x1}}^2$ einen diskreten Grad der Zielnormalverteilung $N(a_{x1}, \delta_{a_{x1}}^2)$ darstellt; und wobei die Zielstatusinformationen, die die Zielnormalverteilung $N(a_{x1}, \delta_{a_{x1}}^2)$ erfüllen, in 2($k$+1) Intervalle diskretisiert werden, wobei $k$ ein zuvor festgelegter Diskretisierungskoeffizient ist;

Durchführen einer Abtastung in einem Zielintervall, um den diskreten Zielwert zu erlangen, wobei das Zielintervall ein beliebiges der 2($k$+1) Intervalle ist, die nach der Diskretisierung erlangt werden;

Erlangen eines Zielwahrscheinlichkeitswertes, der dem diskreten Zielwert entspricht, wobei der Zielwahrscheinlichkeitswert, der dem diskreten Zielwert entspricht, gleich einer Fläche des Zielintervalls ist; und

Festlegen des diskreten Zielwertes und des Zielwahrscheinlichkeitswertes, der dem diskreten Zielwert in der Parametersequenz entspricht.

3. Schätzverfahren nach Anspruch 2, wobei, wenn die Zielstatusinformationen ferner eine Längsbeschleunigung $a_{y1}$ des sich bewegenden Zielobjektes umfassen und das Zielintervall ein i-tes Intervall in den 2($k$+1) Intervallen ist, das Erlangen eines Zielwahrscheinlichkeitswertes, der dem diskreten Zielwert entspricht, Folgendes umfasst:

wenn i eine beliebige ganze Zahl größer als 0 und kleiner als oder gleich $k$ ist, Bestimmen des Zielwahrscheinlichkeitswertes $P_i$, der dem diskreten Zielwert entspricht, gemäß einer ersten Formel, wobei die erste Formel folgendermaßen lautet:

$$P_i = \int_{a_{x1}+(i-1)*\delta_{a_{x1}}}^{a_{x1}+i*\delta_{a_{x1}}} \frac{1}{\sqrt{2\pi}\delta_{a_{x1}}} \exp\left(-\frac{(a_x-a_{x1})^2}{2\delta_{a_{x1}}^2}\right) da_x$$ , wobei ein Integralintervall der ersten Formel

[$a_{x1}+i^*\delta_{a_{x1}}$, $a_{x1}+(i-1)^*\delta_{a_{x1}}$] ist, eine Integralvariable $a_x$ ist, ein Integrand $\frac{1}{\sqrt{2\pi}\delta_{a_{x1}}} \exp\left(-\frac{(a_x-a_{x1})^2}{2\delta_{a_{x1}}^2}\right)$ ist und

$\exp\left(-\frac{(a_x-a_{x1})^2}{2\delta_{a_{x1}}^2}\right)$ eine $\left(-\frac{(a_x-a_{x1})^2}{2\delta_{a_{x1}}^2}\right)$-te Potenz von e ist;

wenn i eine beliebige ganze Zahl größer als -$k$ und kleiner als 0 ist, Bestimmen des Zielwahrscheinlichkeitswertes $P_i$, der dem diskreten Zielwert entspricht, gemäß einer zweiten Formel, wobei die zweite Formel folgendermaßen lautet:

$$P_i = \int_{a_{x1}+i*\delta_{a_{x1}}}^{a_{x1}+(i+1)*\delta_{a_{x1}}} \frac{1}{\sqrt{2\pi}\delta_{a_{x1}}} \exp\left(-\frac{(a_x-a_{x1})^2}{2\delta_{a_{x1}}^2}\right) da_x$$ , wobei ein Integralintervall der zweiten Formel

[$a_{x1}+(i+1)^*\delta_{a_{x1}}$, $a_{x1}+i^*\delta_{a_{x1}}$] ist, eine Integralvariable $a_x$ ist, ein Integrand $\frac{1}{\sqrt{2\pi}\delta_{a_{x1}}} \exp\left(-\frac{(a_x-a_{x1})^2}{2\delta_{a_{x1}}^2}\right)$ ist und

$$\exp\left(-\frac{(a_x-a_{x1})^2}{2\delta^2_{a_{x1}}}\right) \quad \text{eine} \quad \left(-\frac{(a_x-a_{x1})^2}{2\delta^2_{a_{x1}}}\right)\text{-te} \quad \text{Potenz von e ist;}$$

wenn i gleich -k-1 ist, Bestimmen des Zielwahrscheinlichkeitswertes $P_i$, der dem diskreten Zielwert entspricht, gemäß einer dritten Formel, wobei die dritte Formel folgendermaßen lautet:

$$P_i = \int_{a_{x\min}}^{a_{x1}-k*\delta_{a_{x1}}} \frac{1}{\sqrt{2\pi}\delta_{a_{x1}}}\exp\left(-\frac{(a_x-a_{x1})^2}{2\delta^2_{a_{x1}}}\right)da_x \quad , \text{ wobei} \quad a_{x\min} = -\sqrt{a^2_{\max}-a^2_{y1}} \quad , a_{\max} \text{ eine}$$

maximale Beschleunigung des sich bewegenden Zielobjektes darstellt, ein Integralintervall der dritten Formel $[a_{x1}\text{-}k*\delta_{a_{x1}},\ a_{x\min}]$ ist, eine Integralvariable $a_x$ ist, ein Integrand $\frac{1}{\sqrt{2\pi}\delta_{a_{x1}}}\exp\left(-\frac{(a_x-a_{x1})^2}{2\delta^2_{a_{x1}}}\right)$ ist und

$$\exp\left(-\frac{(a_x-a_{x1})^2}{2\delta^2_{a_{x1}}}\right) \quad \text{eine} \quad \left(-\frac{(a_x-a_{x1})^2}{2\delta^2_{a_{x1}}}\right)\text{-te} \quad \text{Potenz von e ist; oder}$$

wenn i gleich k+1 ist, Bestimmen des Zielwahrscheinlichkeitswertes $P_i$, der dem diskreten Zielwert entspricht, gemäß einer vierten Formel, wobei die vierte Formel folgendermaßen lautet:

$$P_i = \int_{a_{x1}+k*\delta_{a_{x1}}}^{a_{x\max}} \frac{1}{\sqrt{2\pi}\delta_{a_{x1}}}\exp\left(-\frac{(a_x-a_{x1})^2}{2\delta^2_{a_{x1}}}\right)da_x \quad , \text{ wobei} \quad a_{x\max} = \sqrt{a^2_{\max}-a^2_{y1}} \quad , \text{ein Integralin-}$$

tervall der vierten Formel $[a_{x\max},\ a_{x1}+k*\delta_{a_{x1}}]$ ist, eine Integralvariable $a_x$ ist, ein Integrand

$$\frac{1}{\sqrt{2\pi}\delta_{a_{x1}}}\exp\left(-\frac{(a_x-a_{x1})^2}{2\delta^2_{a_{x1}}}\right) \quad \text{ist und} \quad \exp\left(-\frac{(a_x-a_{x1})^2}{2\delta^2_{a_{x1}}}\right) \quad \text{eine} \quad \left(-\frac{(a_x-a_{x1})^2}{2\delta^2_{a_{x1}}}\right)\text{-te} \quad \text{Potenz von e ist.}$$

4. Verfahren nach einem der Ansprüche 1 bis 3, wobei, wenn die Zielstatusinformationen ferner eine Quergeschwindigkeit $v_{x1}$ des sich bewegenden Zielobjektes und eine Längsgeschwindigkeit $v_{y1}$ des sich bewegenden Zielobjektes umfassen, das Vorhersagen, basierend auf einem diskreten Zielwert und den Zielstatusinformationen, einer Zielbewegungsspur, die dem diskreten Zielwert entspricht, Folgendes umfasst:

Bestimmen von Koordinaten $(x_{t_0+n\Delta t}, y_{t_0+n\Delta t})$ eines in der Zielbewegungsspur enthaltenen Zielspurpunkts gemäß der fünften Formel, wobei der Zielspurpunkt ein n-ter Spurpunkt in einer Vielzahl von in der Zielbewegungsspur enthaltenen Spurpunkten ist, $t_0$ der aktuelle Zeitpunkt ist, $\Delta t$ ein vorhergesagter Zeitschritt ist und n eine positive ganze Zahl größer als oder gleich 0 ist;

wobei die fünfte Formel $\begin{cases} x_{t_0} = x_1 \\ y_{t_0} = y_1 \end{cases}$ lautet; und

$$\begin{cases} x_{t_0+n\Delta t} = x_1 + v_{x1}n\Delta t + \frac{1}{2}a_{x\_Abtastung}[\text{i}](n\Delta t)^2 \\ y_{t_0+n\Delta t} = y_1 + v_{y1}n\Delta t + \frac{1}{2}a_{y1}(n\Delta t)^2 \end{cases},$$

wobei

$a_{y1}$ die in den Zielstatusinformationen enthaltene Längsbeschleunigung des sich bewegenden Zielobjektes ist, und $a_{x\_Abtastung}[i]$ der diskrete Zielwert ist.

5. Verfahren nach Anspruch 1, wobei das Erlangen eines Zielwahrscheinlichkeitswertes, der dem in der Zielbewegungsspur enthaltenen Zielspurpunkt entspricht, ferner Folgendes umfasst:

Durchführen einer Dämpfungsverarbeitung an einem Zielwahrscheinlichkeitswert $P_i$, der dem Zielspurpunkt $(x_{t_0+n\Delta t}, y_{t_0+n\Delta t})$ entspricht, gemäß einer sechsten Formel, um nach der Dämpfungsverarbeitung einen Zielwahrscheinlichkeitswert $P(x_{t_0+n\Delta t}, y_{t_0+n\Delta t})$ zu erlangen, wobei die sechste Formel $P(x_{t_0+n\Delta t}, y_{t_0+n\Delta t}) = \lambda^n * P_i$ lautet und $\lambda$ ein zuvor festgelegter Wert ist; und

Bestimmen, dass der Zielwahrscheinlichkeitswert, der dem Zielspurpunkt entspricht, der Zielwahrscheinlichkeitswert $P(x_{t_0+n\Delta t}, y_{t_0+n\Delta t})$ ist, der nach der Dämpfungsverarbeitung erlangt wird.

**6.** Verfahren nach Anspruch 1, wobei das Erlangen eines Zielwahrscheinlichkeitswertes, der dem in der Zielbewegungsspur enthaltenen Zielspurpunkt entspricht, ferner Folgendes umfasst:

wenn der Zielspurpunkt, der eine erste zuvor festgelegte Bedingung erfüllt, erlangt wird, Erlangen einer Vielzahl von Wahrscheinlichkeitswerten, die dem Zielspurpunkt entsprechen, wobei die erste zuvor festgelegte Bedingung darin besteht, dass sich der Zielspurpunkt in unterschiedlichen Bewegungsspuren befindet; und Bestimmen eines maximalen Wertes von Wahrscheinlichkeitswerten, die dem Zielspurpunkt in den unterschiedlichen Bewegungsspuren entsprechen, als den Zielwahrscheinlichkeitswert, der dem Zielspurpunkt entspricht.

**7.** Verfahren nach Anspruch 1, wobei das Erlangen eines Zielwahrscheinlichkeitswertes, der dem in der Zielbewegungsspur enthaltenen Zielspurpunkt entspricht, ferner Folgendes umfasst:

Erlangen einer historischen Bewegungsspur, die für das sich bewegende Zielobjekt zu einem historischen Zeitpunkt vorhergesagt wurde, wobei der historische Zeitpunkt ein Zeitpunkt vor dem aktuellen Zeitpunkt ist; wenn der Zielspurpunkt, der eine zweite zuvor festgelegte Bedingung erfüllt, erlangt wird, Erlangen eines ersten Wahrscheinlichkeitswertes und eines zweiten Wahrscheinlichkeitswertes, die dem Zielspurpunkt entsprechen, wobei die zweite zuvor festgelegte Bedingung darin besteht, dass sich der Zielspurpunkt sowohl in der Zielbewegungsspur als auch in der historischen Bewegungsspur befindet, der erste Wahrscheinlichkeitswert ein Wahrscheinlichkeitswert ist, der dem Zielspurpunkt entspricht und der durch Durchführen einer Vorhersage an dem sich bewegenden Zielobjekt zu dem aktuellen Zeitpunkt erlangt wird, und der zweite Wahrscheinlichkeitswert ein Wahrscheinlichkeitswert ist, der dem Zielspurpunkt entspricht und der durch Durchführen einer Vorhersage an dem sich bewegenden Zielobjekt zu dem historischen Zeitpunkt erlangt wird; und Bestimmen des größeren von dem ersten Wahrscheinlichkeitswert und dem zweiten Wahrscheinlichkeitswert als den Zielwahrscheinlichkeitswert, der dem Zielspurpunkt entspricht.

**8.** System zum Vorhersagen einer Wegbelegungskarte eines sich bewegenden Zielobjektes, umfassend:

eine Erlangungseinheit (141), die dazu konfiguriert ist, Zielstatusinformationen des sich bewegenden Zielobjektes zu einem aktuellen Zeitpunkt zu erlangen, wobei das sich bewegende Zielobjekt ein beliebiges von mindestens einem sich bewegenden Objekt um ein Fahrzeug herum ist und die Zielstatusinformationen eine Querbeschleunigung des sich bewegenden Zielobjektes umfassen; eine Durchführungseinheit (142), die dazu konfiguriert ist, eine Diskretisierungsverarbeitung an den Zielstatusinformationen durchzuführen, um eine Parameterfolge zu erlangen, wobei die Parameterfolge eine Vielzahl von diskreten Werten umfasst; eine Vorhersageeinheit (143), die dazu konfiguriert ist, basierend auf einem diskreten Zielwert und den Zielstatusinformationen eine Zielbewegungsspur vorherzusagen, die dem diskreten Zielwert entspricht, wobei der diskrete Zielwert ein beliebiger der Vielzahl von diskreten Werten ist, die in der Parametersequenz enthalten sind, und die Zielbewegungsspur eine Vielzahl von Zielspuren umfasst; eine Bestimmungseinheit (144), die dazu konfiguriert ist, basierend auf der Zielbewegungsspur einen Wegbereich zu bestimmen, in dem sich das sich bewegende Zielobjekt zu einem nachfolgenden Zeitpunkt bewegt, wobei der nachfolgende Zeitpunkt ein Zeitpunkt nach dem aktuellen Zeitpunkt ist; **dadurch gekennzeichnet, dass** die Bestimmungseinheit Folgendes umfasst:

ein erstes Bestimmungsmodul, das dazu konfiguriert ist, einen Zielwahrscheinlichkeitswert zu erlangen, der jedem in der Zielbewegungsspur enthaltenen Zielspurpunkt entspricht, wobei der Zielwahrscheinlichkeitswert, der dem Zielspurpunkt entspricht, gleich dem Zielwahrscheinlichkeitswert ist, der dem diskreten Zielwert entspricht; ein zweites Bestimmungsmodul, das dazu konfiguriert ist, einen Zielspurpunkt zu erlangen, der eine Regressionsanpassungsbedingung erfüllt, wobei der Zielspurpunkt, der die Regressionsanpassungsbedingung erfüllt, ein Spurpunkt ist, der einem Zielwahrscheinlichkeitswert entspricht, welcher größer als oder gleich einem zuvor festgelegten Wahrscheinlichkeitswert ist; und ein drittes Bestimmungsmodul, das dazu konfiguriert ist, eine Regressionsanpassung basierend auf dem Zielspurpunkt, der die Regressionsanpassungsbedingung erfüllt, durchzuführen, um den Wegbereich zu erlangen, in dem sich das sich bewegende Zielobjekt zu dem nächsten Zeitpunkt bewegt.

**9.** Fahrwegschätzsystem nach Anspruch 8, wobei die Verarbeitungseinheit Folgendes umfasst:

ein erstes Erlangungsmodul, das dazu konfiguriert ist, festzulegen, dass die Zielstatusinformationen eine Ziel-

normalverteilung $N(a_{x1}, \delta^2_{a_{x1}})$ erfüllen, wobei eine Erwartung der Zielnormalverteilung die Querbeschleunigung $a_{x1}$ ist, eine Varianz der Zielnormalverteilung $\delta^2_{a_{x1}}$ ist und die Varianz $\delta^2_{a_{x1}}$ einen diskreten Grad der Zielnormalverteilung $N(a_{x1}, \delta^2_{a_{x1}})$ darstellt; und wobei die Zielstatusinformationen, die die Zielnormalverteilung $N(a_{x1}, \delta^2_{a_{x1}})$ erfüllen, in $2(k+1)$ Intervalle diskretisiert werden, wobei $k$ ein zuvor festgelegter Diskretisierungskoeffizient ist;

ein Abtastmodul, das dazu konfiguriert ist, eine Abtastung in einem Zielintervall durchzuführen, um den diskreten Zielwert zu erlangen, wobei das Zielintervall ein beliebiges der $2(k+1)$ Intervalle ist, die nach der Diskretisierung erlangt werden;

ein zweites Erlangungsmodul, das dazu konfiguriert ist, einen Zielwahrscheinlichkeitswert zu erlangen, der dem diskreten Zielwert entspricht, wobei der Zielwahrscheinlichkeitswert, der dem diskreten Zielwert entspricht, gleich einer Fläche des Zielintervalls ist; und

ein Festlegungsmodul, das dazu konfiguriert ist, den diskreten Zielwert und den Zielwahrscheinlichkeitswert, der dem diskreten Zielwert in der Parametersequenz entspricht, festzulegen.

10. Fahrwegschätzsystem nach Anspruch 9, wobei, wenn die Zielstatusinformationen ferner die Längsbeschleunigung $a_{y1}$ des sich bewegenden Zielobjektes umfassen und das Zielintervall ein i-tes Intervall in den $2(k+1)$ Intervallen ist, das zweite Erlangungsmodul spezifisch Folgendes umfasst:

ein erstes Berechnungsuntermodul, das zu Folgendem konfiguriert ist: wenn i eine beliebige ganze Zahl größer als 0 und kleiner als oder gleich $k$ ist, Bestimmen des Zielwahrscheinlichkeitswertes $P_i$, der dem diskreten Zielwert entspricht, gemäß einer ersten Formel, wobei die erste Formel folgendermaßen lautet:

$$P_i = \int_{a_{x1}+(i-1)*\delta_{a_{x1}}}^{a_{x1}+i*\delta_{a_{x1}}} \frac{1}{\sqrt{2\pi}\delta_{a_{x1}}} \exp\left(-\frac{(a_x-a_{x1})^2}{2\delta^2_{a_{x1}}}\right) da_x$$

, wobei ein Integralintervall der ersten Formel $[a_{x1} + i*\delta_{a_{x1}}, a_{x1} + (i-1)*\delta_{ax1}]$ ist, eine Integralvariable $a_x$ ist, ein Integrand $\frac{1}{\sqrt{2\pi}\delta_{a_{x1}}} \exp\left(-\frac{(a_x-a_{x1})^2}{2\delta^2_{a_{x1}}}\right)$ ist und $\exp\left(-\frac{(a_x-a_{x1})^2}{2\delta^2_{a_{x1}}}\right)$ eine $\left(-\frac{(a_x-a_{x1})^2}{2\delta^2_{a_{x1}}}\right)$-te Potenz von e ist;

ein zweites Berechnungsuntermodul, das zu Folgendem konfiguriert ist: wenn i eine beliebige ganze Zahl größer als -$k$ und kleiner als 0 ist, Bestimmen des Zielwahrscheinlichkeitswertes $P_i$, der dem diskreten Zielwert entspricht, gemäß einer zweiten Formel, wobei die zweite Formel folgendermaßen lautet:

$$P_i = \int_{a_{x1}+i*\delta_{a_{x1}}}^{a_{x1}+(i+1)*\delta_{a_{x1}}} \frac{1}{\sqrt{2\pi}\delta_{a_{x1}}} \exp\left(-\frac{(a_x-a_{x1})^2}{2\delta^2_{a_{x1}}}\right) da_x$$

, wobei ein Integralintervall der zweiten Formel $[a_{x1} + (i+1)*\delta_{a_{x1}}, a_{x1} + i*\delta_{ax1}]$ ist, eine Integralvariable $a_x$ ist, ein Integrand $\frac{1}{\sqrt{2\pi}\delta_{a_{x1}}} \exp\left(-\frac{(a_x-a_{x1})^2}{2\delta^2_{a_{x1}}}\right)$ ist und $\exp\left(-\frac{(a_x-a_{x1})^2}{2\delta^2_{a_{x1}}}\right)$ eine $\left(-\frac{(a_x-a_{x1})^2}{2\delta^2_{a_{x1}}}\right)$-te Potenz von e ist;

ein drittes Berechnungsuntermodul, das zu Folgendem konfiguriert ist: wenn i gleich -$k$-$1$ ist, Bestimmen des Zielwahrscheinlichkeitswertes $P_i$, der dem diskreten Zielwert entspricht, gemäß einer dritten Formel, wobei die dritte Formel folgendermaßen lautet:

$$P_i = \int_{a_{x\min}}^{a_{x1}-k*\delta_{a_{x1}}} \frac{1}{\sqrt{2\pi}\delta_{a_{x1}}} \exp\left(-\frac{(a_x-a_{x1})^2}{2\delta^2_{a_{x1}}}\right) da_x$$

, wobei $a_{x\min} = -\sqrt{a^2_{\max} - a^2_{y1}}$, $a_{\max}$ eine maximale Beschleunigung des sich bewegenden Zielobjektes darstellt, ein Integralintervall der dritten Formel

$[a_{x1} - k * \delta_{a_{x1}}, a_{x\min}]$ ist, eine Integralvariable $a_x$ ist, ein Integrand $\frac{1}{\sqrt{2\pi}\delta_{a_{x1}}}\exp\left(-\frac{(a_x - a_{x1})^2}{2\delta^2_{a_{x1}}}\right)$ ist und

$\exp\left(-\frac{(a_x - a_{x1})^2}{2\delta^2_{a_{x1}}}\right)$ eine $\left(-\frac{(a_x - a_{x1})^2}{2\delta^2_{a_{x1}}}\right)$-te Potenz von e ist; oder

ein viertes Berechnungsuntermodul, das zu Folgendem konfiguriert ist: wenn i gleich *k+1* ist, Bestimmen des Zielwahrscheinlichkeitswertes $P_i$, der dem diskreten Zielwert entspricht, gemäß einer vierten Formel, wobei die vierte Formel folgendermaßen lautet:

$$P_i = \int_{a_{x1} + k * \delta_{a_{x1}}}^{a_{x\max}} \frac{1}{\sqrt{2\pi}\delta_{a_{x1}}}\exp\left(-\frac{(a_x - a_{x1})^2}{2\delta^2_{a_{x1}}}\right)da_x \qquad a_{x\max} = \sqrt{a^2_{\max} - a^2_{y1}}$$

, wobei , ein Integral-

intervall der vierten Formel $[a_{x\max}, a_{x1} + k * \delta_{a_{x1}}]$ ist, eine Integralvariable $a_x$ ist, ein Integrand

$\frac{1}{\sqrt{2\pi}\delta_{a_{x1}}}\exp\left(-\frac{(a_x - a_{x1})^2}{2\delta^2_{a_{x1}}}\right)$ ist und $\exp\left(-\frac{(a_x - a_{x1})^2}{2\delta^2_{a_{x1}}}\right)$ eine $\left(-\frac{(a_x - a_{x1})^2}{2\delta^2_{a_{x1}}}\right)$-te Potenz von e ist.

**11.** Fahrwegschätzsystem nach Anspruch 8, wobei, wenn die Zielstatusinformationen ferner eine Quergeschwindigkeit $v_{x1}$ des sich bewegenden Zielobjektes und eine Längsgeschwindigkeit $v_{y1}$ des sich bewegenden Zielobjektes umfassen, die Vorhersageeinheit spezifisch zu Folgendem konfiguriert ist: Bestimmen von Koordinaten $(x_{t_0 + n\Delta t}, y_{t_0 + n\Delta t})$ eines in der Zielbewegungsspur enthaltenen Zielspurpunkts gemäß einer fünften Formel, wobei der Zielspurpunkt ein n-ter Spurpunkt in einer Vielzahl von in der Zielbewegungsspur enthaltenen Spurpunkten ist, $t_0$ der aktuelle Zeitpunkt ist, $\Delta t$ ein vorhergesagter Zeitschritt ist und n eine positive ganze Zahl größer als oder gleich 0 ist;

wobei die fünfte Formel $\begin{cases} x_{t_0} = x_1 \\ y_{t_0} = y_1 \end{cases}$ lautet; und

$$\begin{cases} x_{t_0 + n\Delta t} = x_1 + v_{x1}n\Delta t + \frac{1}{2}a_{x\_Abtastung}[\mathrm{i}](n\Delta t)^2 \\ y_{t_0 + n\Delta t} = y_1 + v_{y1}n\Delta t + \frac{1}{2}a_{y1}(n\Delta t)^2 \end{cases},$$

wobei

$a_{y1}$ die in den Zielstatusinformationen enthaltene Längsbeschleunigung des sich bewegenden Zielobjektes ist, und $a_{x\_Abtastung}[i]$ der diskrete Zielwert ist.

**12.** Fahrwegschätzsystem nach Anspruch 8, wobei das erste Bestimmungsmodul Folgendes umfasst:

ein erstes Bestimmungsuntermodul, das dazu konfiguriert ist, eine Dämpfungsverarbeitung an einem Zielwahrscheinlichkeitswert $P_i$, der dem Zielspurpunkt $(x_{t_0 + n\Delta t}, y_{t_0 + n\Delta t})$ entspricht, gemäß einer sechsten Formel durchzuführen, um nach der Dämpfungsverarbeitung einen Zielwahrscheinlichkeitswert $P(x_{t_0 + n\Delta t}, y_{t_0 + n\Delta t})$ zu erlangen, wobei die sechste Formel $P(x_{t_0 + n\Delta t}, y_{t_0 + n\Delta t}) = \lambda^n * P_i$ lautet und $\lambda$ ein zuvor festgelegter Wert ist; und
ein zweites Bestimmungsmodul, das dazu konfiguriert ist, zu bestimmen, dass der Zielwahrscheinlichkeitswert, der dem Zielspurpunkt entspricht, der Zielwahrscheinlichkeitswert $P(x_{t_0 + n\Delta t}, y_{t_0 + n\Delta t})$ ist, der nach der Dämpfungsverarbeitung erlangt wird.

**13.** Fahrwegschätzsystem nach Anspruch 8, wobei das erste Bestimmungsmodul Folgendes umfasst:

ein drittes Bestimmungsuntermodul, das zu Folgendem konfiguriert ist: wenn der Zielspurpunkt, der eine erste zuvor festgelegte Bedingung erfüllt, erlangt wird, Erlangen einer Vielzahl von Wahrscheinlichkeitswerten, die dem Zielspurpunkt entsprechen, wobei die erste zuvor festgelegte Bedingung darin besteht, dass sich der Zielspurpunkt in unterschiedlichen Bewegungsspuren befindet; und
ein viertes Bestimmungsuntermodul, das dazu konfiguriert ist, einen maximalen Wert von Wahrscheinlichkeitswerten, die dem Zielspurpunkt in den unterschiedlichen Bewegungsspuren entsprechen, als den Zielwahrscheinlichkeitswert zu bestimmen, der dem Zielspurpunkt entspricht.

**14.** Fahrwegschätzsystem nach Anspruch 8, wobei das erste Bestimmungsmodul Folgendes umfasst:

ein fünftes Bestimmungsuntermodul, das dazu konfiguriert ist, eine historische Bewegungsspur zu erlangen, die für das sich bewegende Zielobjekt zu einem historischen Zeitpunkt vorhergesagt wurde, wobei der historische Zeitpunkt ein Zeitpunkt vor dem aktuellen Zeitpunkt ist;

ein sechstes Bestimmungsuntermodul, das zu Folgendem konfiguriert ist: wenn der Zielspurpunkt, der eine zweite zuvor festgelegte Bedingung erfüllt, erlangt wird, Erlangen eines ersten Wahrscheinlichkeitswertes und eines zweiten Wahrscheinlichkeitswertes, die dem Zielspurpunkt entsprechen, wobei die zweite zuvor festgelegte Bedingung darin besteht, dass sich der Zielspurpunkt sowohl in der Zielbewegungsspur als auch in der historischen Bewegungsspur befindet, der erste Wahrscheinlichkeitswert ein Wahrscheinlichkeitswert ist, der dem Zielspurpunkt entspricht und der durch Durchführen einer Vorhersage an dem sich bewegenden Zielobjekt zu dem aktuellen Zeitpunkt erlangt wird, und der zweite Wahrscheinlichkeitswert ein Wahrscheinlichkeitswert ist, der dem Zielspurpunkt entspricht und der durch Durchführen einer Vorhersage an dem sich bewegenden Zielobjekt zu dem historischen Zeitpunkt erlangt wird; und

ein siebtes Bestimmungsuntermodul, das dazu konfiguriert ist, den größeren von dem ersten Wahrscheinlichkeitswert und dem zweiten Wahrscheinlichkeitswert als den Zielwahrscheinlichkeitswert, der dem Zielspurpunkt entspricht, zu bestimmen.

15. Computerlesbares Speichermedium, umfassend eine Anweisung, wobei, wenn die Anweisung auf einem Prozessor ausgeführt wird, der Prozessor in die Lage versetzt wird, das Verfahren nach einem der Ansprüche 1 bis 7 durchzuführen.

## Revendications

1. Procédé de prédiction d'une carte d'occupation routière d'un objet mobile cible, comprenant :

l'obtention (301) d'informations d'état cible de l'objet mobile cible à un moment actuel, dans lequel l'objet mobile cible est l'un quelconque d'au moins un objet mobile autour d'un véhicule, et les informations d'état cible comprennent une accélération latérale de l'objet mobile cible ;

la réalisation (302) d'un traitement de discrétisation sur les informations d'état cible pour obtenir une séquence de paramètres, dans lequel la séquence de paramètres comprend une pluralité de valeurs discrètes ;

la prédiction (303), sur la base d'une valeur discrète cible et des informations d'état cible, d'une trajectoire de mouvement cible correspondant à la valeur discrète cible, dans lequel la valeur discrète cible est l'une quelconque de la pluralité de valeurs discrètes comprises dans la séquence de paramètres, et la trajectoire de mouvement cible comprend une pluralité de points de trajectoire cible ;

la détermination (304), sur la base de la trajectoire de mouvement cible, d'une région routière dans laquelle l'objet mobile cible se déplace à un moment ultérieur, dans lequel le moment ultérieur est un moment suivant le moment actuel ;

**caractérisé en ce que** la détermination comprend :

l'obtention d'une valeur de probabilité cible correspondant à chaque point de trajectoire cible compris dans la trajectoire de mouvement cible, dans lequel la valeur de probabilité cible correspondant au point de trajectoire cible est égale à la valeur de probabilité cible correspondant à la valeur discrète cible ;

l'obtention d'un point de trajectoire cible qui satisfait une condition d'ajustement de régression, dans lequel le point de trajectoire cible qui satisfait la condition d'ajustement de régression est un point de trajectoire correspondant à une valeur de probabilité cible supérieure ou égale à une valeur de probabilité prédéfinie ; et

la réalisation d'un ajustement de régression sur la base du point de trajectoire cible qui satisfait la condition d'ajustement de régression, pour obtenir la région routière dans laquelle l'objet mobile cible se déplace au moment ultérieur.

2. Procédé selon la revendication 1, dans lequel la réalisation du traitement de discrétisation sur les informations d'état cible pour obtenir une séquence de paramètres comprend :

la définition selon laquelle les informations d'état cible satisfont une distribution gaussienne cible $N(a_{x1}, \delta^2_{a_{x1}})$, dans lequel une attente de la distribution gaussienne cible est l'accélération latérale $a_{x1}$, une variance de la distribution gaussienne cible est $\delta^2_{a_{x1}}$, et la variance $\delta^2_{a_{x1}}$ représente un degré discret de la distribution gaus-

sienne cible $N(a_{x1}, \delta^2_{a_{x1}})$ ; et les informations d'état cible satisfaisant la distribution gaussienne cible

$N(a_{x1}, \delta^2_{a_{x1}})$ sont discrétisées en 2(k+1) intervalles, où k est un coefficient de discrétisation prédéfini ;

la réalisation d'un échantillonnage dans un intervalle cible pour obtenir la valeur discrète cible, dans lequel l'intervalle cible est l'un quelconque des 2(k+1) intervalles obtenus après discrétisation ;

l'obtention d'une valeur de probabilité cible correspondant à la valeur discrète cible, dans lequel la valeur de probabilité cible correspondant à la valeur discrète cible est égale à une zone de l'intervalle cible ; et

la définition de la valeur discrète cible et la valeur de probabilité cible correspondant à la valeur discrète cible dans la séquence de paramètres.

3. Procédé d'estimation selon la revendication 2, dans lequel lorsque les informations d'état cible comprennent en outre une accélération longitudinale $a_{y1}$ de l'objet mobile cible, et que l'intervalle cible est un ième intervalle parmi les 2(k+1) intervalles, l'obtention d'une valeur de probabilité cible correspondant à la valeur discrète cible comprend :

si i est un nombre entier supérieur à 0 et inférieur ou égal à k, la détermination, selon une première formule, de la valeur de probabilité cible $P_i$ correspondant à la valeur discrète cible, dans lequel la première formule est :

$$P_i = \int_{a_{x1}+(i-1)^*\delta_{a_{x1}}}^{a_{x1}+i^*\delta_{a_{x1}}} \frac{1}{\sqrt{2\pi}\delta_{a_{x1}}} \exp\left(-\frac{(a_x - a_{x1})^2}{2\delta^2_{a_{x1}}}\right) da_x$$

, où un intervalle intégral de la première formule est $[a_{x1}+i^*\delta_{a_{x1}}, a_{x1}+(i-1)^*\delta_{a_{x1}}]$, une variable intégrale est $a_x$, un intégrande est $\frac{1}{\sqrt{2\pi}\delta_{a_{x1}}}\exp\left(-\frac{(a_x - a_{x1})^2}{2\delta^2_{a_{x1}}}\right)$, et $\exp\left(-\frac{(a_x - a_{x1})^2}{2\delta^2_{a_{x1}}}\right)$ est une $\left(-\frac{(a_x - a_{x1})^2}{2\delta^2_{a_{x1}}}\right)$ th puissance de e ;

si i est un nombre entier supérieur à -k et inférieur à 0, la détermination, selon une deuxième formule, de la valeur de probabilité cible $P_i$ correspondant à la valeur discrète cible, dans lequel la deuxième formule est :

$$P_i = \int_{a_{x1}+i^*\delta_{a_{x1}}}^{a_{x1}+(i+1)^*\delta_{a_{x1}}} \frac{1}{\sqrt{2\pi}\delta_{a_{x1}}} \exp\left(-\frac{(a_x - a_{x1})^2}{2\delta^2_{a_{x1}}}\right) da_x$$

, où un intervalle intégral de la deuxième formule est $[a_{x1}+(i+1)^*\delta_{a_{x1}}, a_{x1}+i^*\delta_{a_{x1}}]$, une variable intégrale est $a_x$, un intégrande est $\frac{1}{\sqrt{2\pi}\delta_{a_{x1}}}\exp\left(-\frac{(a_x - a_{x1})^2}{2\delta^2_{a_{x1}}}\right)$, et $\exp\left(-\frac{(a_x - a_{x1})^2}{2\delta^2_{a_{x1}}}\right)$ est une $\left(-\frac{(a_x - a_{x1})^2}{2\delta^2_{a_{x1}}}\right)$ th puissance de e ;

si i est égal à -k-1, la détermination, selon une troisième formule, de la valeur de probabilité cible $P_i$ correspondant à la valeur discrète cible, dans lequel la troisième formule est :

$$P_i = \int_{a_{x\min}}^{a_{x1}-k^*\delta_{a_{x1}}} \frac{1}{\sqrt{2\pi}\delta_{a_{x1}}} \exp\left(-\frac{(a_x - a_{x1})^2}{2\delta^2_{a_{x1}}}\right) da_x$$ , où $a_{x\min} = -\sqrt{a^2_{\max} - a^2_{y1}}$, $a_{\max}$ représente une accélération maximale de l'objet mobile cible, un intervalle intégral de la troisième formule est $[a_{x1}-k^*\delta_{a_{x1}}, a_{x\min}]$, une variable intégrale est $a_x$, un intégrande est $\frac{1}{\sqrt{2\pi}\delta_{a_{x1}}}\exp\left(-\frac{(a_x - a_{x1})^2}{2\delta^2_{a_{x1}}}\right)$ et $\exp\left(-\frac{(a_x - a_{x1})^2}{2\delta^2_{a_{x1}}}\right)$ est une $\left(-\frac{(a_x - a_{x1})^2}{2\delta^2_{a_{x1}}}\right)$ th puissance de e ; ou

si i est égal à k+1, la détermination, selon une quatrième formule, de la valeur de probabilité cible $P_i$ correspondant à la valeur discrète cible, dans lequel la quatrième formule est :

$$P_i = \int_{a_{x1}+k^*\delta_{a_{x1}}}^{a_{x\max}} \frac{1}{\sqrt{2\pi}\delta_{a_{x1}}} \exp\left(-\frac{(a_x - a_{x1})^2}{2\delta^2_{a_{x1}}}\right) da_x$$ $a_{x\max} = \sqrt{a^2_{\max} - a^2_{y1}}$ , où , un intervalle intégral de la quatrième

formule est [$a_{xmax}$, $a_{x1} + k^*\delta_{a_{x1}}$], une variable intégrale est $a_x$, un intégrande est $\frac{1}{\sqrt{2\pi}\delta_{a_{x1}}} \exp(-\frac{(a_x - a_{x1})^2}{2\delta_{a_{x1}}^2})$ , et

$\exp(-\frac{(a_x - a_{x1})^2}{2\delta_{a_{x1}}^2})$ est une $(-\frac{(a_x - a_{x1})^2}{2\delta_{a_{x1}}^2})$ th puissance de e.

**4.** Procédé selon l'une quelconque des revendications 1 à 3, dans lequel si les informations d'état cible comprennent en outre une vitesse latérale $v_{x1}$ de l'objet mobile cible et une vitesse longitudinale $v_{y1}$ de l'objet mobile cible, la prédiction, sur la base d'une valeur discrète cible et des informations d'état cible, d'une trajectoire de mouvement cible correspondant à la valeur discrète cible comprend :

la détermination, selon la cinquième formule, de coordonnées ($x_{t0+n\Delta t}$,$y_{t0+n\Delta t}$) d'un point de trajectoire cible compris dans la trajectoire de mouvement cible, dans lequel le point de trajectoire cible est un nième point de trajectoire parmi une pluralité de points de trajectoire compris dans la trajectoire de mouvement cible, $t_0$ est le moment actuel, $\Delta t$ est un pas de temps prédit, et n est un nombre entier positif supérieur ou égal à 0 ;

la cinquième formule est $\begin{cases} x_{t_0} = x_1 \\ y_{t_0} = y_1 \end{cases}$ ; et

$$\begin{cases} x_{t_0+n\Delta t} = x_1 + v_{x_1} n\Delta t + \frac{1}{2} a_{x\_sample}[\mathrm{i}](n\Delta t)^2 \\ y_{t_0+n\Delta t} = y_1 + v_{y_1} n\Delta t + \frac{1}{2} a_{y1}(n\Delta t)^2 \end{cases} ,$$

où

$a_{y1}$ est l'accélération longitudinale de l'objet mobile cible comprise dans les informations d'état cible, et $a_{x\_sample}[i]$ est la valeur discrète cible.

**5.** Procédé selon la revendication 1, dans lequel l'obtention d'une valeur de probabilité cible correspondant au point de trajectoire cible compris dans la trajectoire de mouvement cible comprend en outre :

la réalisation, selon une sixième formule, d'un traitement d'atténuation sur une valeur de probabilité cible $P_i$ correspondant au point de trajectoire cible ($x_{t0+n\Delta t}$,$y_{t0+n\Delta t}$) pour obtenir une valeur de probabilité cible $P(x_{t0+n\Delta t}$,$y_{t0+n\Delta t})$ après le traitement d'atténuation, dans lequel
la sixième formule est $P(x_{t0+n\Delta t}, y_{t0+n\Delta t}) = \lambda^n {}_* P_i$, et $\lambda$ est une valeur prédéfinie ; et
la détermination que la valeur de probabilité cible correspondant au point de trajectoire cible est la valeur de probabilité cible $P(x_{t0+n\Delta t}$,$y_{t0+n\Delta t})$ obtenue après le traitement d'atténuation.

**6.** Procédé selon la revendication 1, dans lequel l'obtention d'une valeur de probabilité cible correspondant au point de trajectoire cible compris dans la trajectoire de mouvement cible comprend en outre :

si le point de trajectoire cible qui satisfait une première condition prédéfinie est obtenu, l'obtention d'une pluralité de valeurs de probabilité correspondant au point de trajectoire cible, dans lequel la première condition prédéfinie est que le point de trajectoire cible est situé dans différentes trajectoires de mouvement ; et
la détermination, en tant que valeur de probabilité cible correspondant au point de trajectoire cible, d'une valeur maximale de valeurs de probabilité qui correspondent au point de trajectoire cible dans les différentes trajectoires de mouvement.

**7.** Procédé selon la revendication 1, dans lequel l'obtention d'une valeur de probabilité cible correspondant au point de trajectoire cible compris dans la trajectoire de mouvement cible comprend en outre :

l'obtention d'une trajectoire de mouvement passée qui a été prédite pour l'objet mobile cible à un moment passé, dans lequel le moment passé est un moment antérieur au moment actuel ;
si le point de trajectoire cible qui satisfait une seconde condition prédéfinie est obtenu, l'obtention d'une première valeur de probabilité et d'une seconde valeur de probabilité qui correspondent au point de trajectoire cible, dans lequel la seconde condition prédéfinie est que le point de trajectoire cible est situé à la fois dans la trajectoire de mouvement cible et la trajectoire de mouvement passée, la première valeur de probabilité est une valeur de probabilité qui correspond au point de trajectoire cible et qui est obtenue en réalisant une prédiction sur l'objet mobile cible au moment actuel, et la seconde valeur de probabilité est une valeur de probabilité qui correspond au point de trajectoire cible et qui est obtenue en réalisant une prédiction sur l'objet mobile cible au moment passé ; et

la détermination de la plus grande parmi la première valeur de probabilité et la seconde valeur de probabilité comme valeur de probabilité cible correspondant au point de trajectoire cible.

8. Système de prédiction d'une carte d'occupation routière d'un objet mobile cible, comprenant :

une unité d'obtention (141), configurée pour obtenir des informations d'état cible de l'objet mobile cible à un moment actuel, dans lequel l'objet mobile cible est l'un quelconque d'au moins un objet mobile autour d'un véhicule, et les informations d'état cible comprennent une accélération latérale de l'objet mobile cible ;

une unité de traitement (142), configurée pour réaliser un traitement de discrétisation sur les informations d'état cible pour obtenir une séquence de paramètres, dans lequel la séquence de paramètres comprend une pluralité de valeurs discrètes ;

une unité de prédiction (143), configurée pour prédire, sur la base d'une valeur discrète cible et des informations d'état cible, une trajectoire de mouvement cible correspondant à la valeur discrète cible, dans lequel la valeur discrète cible est l'une quelconque de la pluralité de valeurs discrètes comprises dans la séquence de paramètres, et la trajectoire de mouvement cible comprend une pluralité de trajectoires cibles ;

une unité de détermination (144), configurée pour déterminer, sur la base de la trajectoire de mouvement cible, une région routière dans laquelle l'objet mobile cible se déplace à un moment ultérieur, dans lequel le moment ultérieur est un moment suivant le moment actuel ;

**caractérisé en ce que** l'unité de détermination comprend :

un premier module de détermination, configuré pour obtenir une valeur de probabilité cible correspondant à chaque point de trajectoire cible compris dans la trajectoire de mouvement cible, dans lequel la valeur de probabilité cible correspondant au point de trajectoire cible est égale à la valeur de probabilité cible correspondant à la valeur discrète cible ;

un second module de détermination, configuré pour obtenir un point de trajectoire cible qui satisfait une condition d'ajustement de régression, dans lequel le point de trajectoire cible qui satisfait la condition d'ajustement de régression est un point de trajectoire correspondant à une valeur de probabilité cible supérieure ou égale à une valeur de probabilité prédéfinie ; et

un troisième module de détermination, configuré pour réaliser un ajustement de régression sur la base du point de trajectoire cible qui satisfait la condition d'ajustement de régression, pour obtenir la région routière dans laquelle l'objet mobile cible se déplace au moment ultérieur.

9. Système permettant d'estimer une route de circulation selon la revendication 8, dans lequel l'unité de traitement comprend :

un premier module d'obtention, configuré pour définir que les informations d'état cible satisfont une distribution gaussienne cible $N(a_{x1}, \delta^2_{a_{x1}})$, dans lequel une attente de la distribution gaussienne cible est l'accélération latérale $a_{x1}$, une variance de la distribution gaussienne cible est $\delta^2_{a_{x1}}$, et la variance $\delta^2_{a_{x1}}$ représente un degré discret de la distribution gaussienne cible $N(a_{x1}, \delta^2_{a_{x1}})$ ; et les informations d'état cible satisfaisant la distribution gaussienne cible $N(a_{x1}, \delta^2_{a_{x1}})$ sont discrétisées en 2(k+1) intervalles, où k est un coefficient de discrétisation prédéfini ;

un module d'échantillonnage, configuré pour effectuer un échantillonnage dans un intervalle cible afin d'obtenir la valeur discrète cible, dans lequel l'intervalle cible est l'un quelconque des 2(k+1) intervalles obtenus après discrétisation ; un second module d'obtention, configuré pour obtenir une valeur de probabilité cible correspondant à la valeur discrète cible, dans lequel la valeur de probabilité cible correspondant à la valeur discrète cible est égale à une zone de l'intervalle cible ; et

un module de définition, configuré pour définir la valeur discrète cible et la valeur de probabilité cible correspondant à la valeur discrète cible dans la séquence de paramètres.

10. Système permettant d'estimer une route de circulation selon la revendication 9, dans lequel, lorsque les informations d'état cible comprennent en outre l'accélération longitudinale $a_{y1}$ de l'objet mobile cible, et que l'intervalle cible est un ième intervalle parmi les 2(k+1) intervalles, le deuxième module d'obtention comprend spécifiquement :

un premier sous-module de calcul, configuré pour : si i est un nombre entier supérieur à 0 et inférieur ou égal à k, déterminer, selon une première formule, la valeur de probabilité cible $P_i$ correspondant à la valeur discrète cible, dans lequel la première formule est :

$$P_i = \int_{a_{x1}+(i-1)^*\delta_{a_{x1}}}^{a_{x1}+i^*\delta_{a_{x1}}} \frac{1}{\sqrt{2\pi}\delta_{a_{x1}}} \exp\left(-\frac{(a_x - a_{x1})^2}{2\delta_{a_{x1}}^2}\right) da_x ,$$

où un intervalle intégral de la première formule est $[a_{x1}+i^*\delta_{a_{x1}}, a_{x1}+(i-1)^*\delta_{a_{x1}}]$, une variable intégrale est $a_x$, un intégrande est

$$\frac{1}{\sqrt{2\pi}\delta_{a_{x1}}} \exp\left(-\frac{(a_x - a_{x1})^2}{2\delta_{a_{x1}}^2}\right) ,$$

et

$$\exp\left(-\frac{(a_x - a_{x1})^2}{2\delta_{a_{x1}}^2}\right)$$

est une

$$\left(-\frac{(a_x - a_{x1})^2}{2\delta_{a_{x1}}^2}\right) \text{th}$$

puissance de e ;
un deuxième sous-module de calcul, configuré pour : si i est un nombre entier supérieur à -k et inférieur à 0, déterminer, selon une deuxième formule, la valeur de probabilité cible $P_i$ correspondant à la valeur discrète cible, dans lequel la deuxième formule est :

$$P_i = \int_{a_{x1}+i^*\delta_{a_{x1}}}^{a_{x1}+(i+1)^*\delta_{a_{x1}}} \frac{1}{\sqrt{2\pi}\delta_{a_{x1}}} \exp\left(-\frac{(a_x - a_{x1})^2}{2\delta_{a_{x1}}^2}\right) da_x ,$$

où un intervalle intégral de la deuxième formule est $[a_{x1}+(i+1)^*\delta_{a_{x1}}, a_{x1}+i^*\delta_{a_{x1}}]$, une variable intégrale est $a_x$, un intégrande est

$$\frac{1}{\sqrt{2\pi}\delta_{a_{x1}}} \exp\left(-\frac{(a_x - a_{x1})^2}{2\delta_{a_{x1}}^2}\right) ,$$

et

$$\exp\left(-\frac{(a_x - a_{x1})^2}{2\delta_{a_{x1}}^2}\right)$$

est une

$$(-\frac{(a_x - a_{x1})^2}{2\delta_{a_{x1}}^2})\text{th}$$

puissance de e ;

un troisième sous-module de calcul, configuré pour : si i est égal à -k-1, déterminer, selon une troisième formule, la valeur de probabilité cible $P_i$ correspondant à la valeur discrète cible, dans lequel la troisième formule est :

$$P_i = \int_{a_{xmin}}^{a_{x1}-k*\delta_{a_{x1}}} \frac{1}{\sqrt{2\pi}\delta_{a_{x1}}} \exp(-\frac{(a_x - a_{x1})^2}{2\delta_{a_{x1}}^2})da_x \quad ,$$

où

$$a_{xmin} = -\sqrt{a_{max}^2 - a_{y1}^2} \quad ,$$

$a_{max}$ représente une accélération maximale de l'objet mobile cible, un intervalle intégral de la troisième formule est $[a_{x1}-k*\delta_{a_{x1}}, a_{xmin}]$, une variable intégrale est $a_x$, un intégrande est

$$\frac{1}{\sqrt{2\pi}\delta_{a_{x1}}} \exp(-\frac{(a_x - a_{x1})^2}{2\delta_{a_{x1}}^2})$$

et

$$\exp(-\frac{(a_x - a_{x1})^2}{2\delta_{a_{x1}}^2})$$

est une

$$(-\frac{(a_x - a_{x1})^2}{2\delta_{a_{x1}}^2})\text{th}$$

puissance de e ; ou

un quatrième sous-module de calcul, configuré pour : si i est égal à k+1, déterminer, selon une quatrième formule, la valeur de probabilité cible $P_i$ correspondant à la valeur discrète cible, dans lequel la quatrième formule est :

$$P_i = \int_{a_{x1}+k*\delta_{a_{x1}}}^{a_{xmax}} \frac{1}{\sqrt{2\pi}\delta_{a_{x1}}} \exp(-\frac{(a_x - a_{x1})^2}{2\delta_{a_{x1}}^2})da_x \quad ,$$

où

$$a_{xmax} = \sqrt{a_{max}^2 - a_{y1}^2} \quad ,$$

un intervalle intégral de la quatrième formule est $[a_{xmax}, a_{x1}+ k*\delta_{a_{x1}}]$ , une variable intégrale est $a_x$, un intégrande

est

$$\frac{1}{\sqrt{2\pi}\delta_{a_{x1}}}\exp(-\frac{(a_x - a_{x1})^2}{2\delta_{a_{x1}}^2}),$$

et

$$\exp(-\frac{(a_x - a_{x1})^2}{2\delta_{a_{x1}}^2})$$

est une

$$(-\frac{(a_x - a_{x1})^2}{2\delta_{a_{x1}}^2})\text{th}$$

puissance de e.

**11.** Système permettant d'estimer une route de circulation selon la revendication 8, dans lequel si les informations d'état cible comprennent en outre une vitesse latérale $v_{x1}$ de l'objet mobile cible et une vitesse longitudinale $v_{y1}$ de l'objet mobile cible, l'unité de prédiction est spécifiquement configurée pour :

déterminer, selon une cinquième formule, les coordonnées $(x_{t_0+n\Delta t}, y_{t_0+n\Delta t})$ d'un point de trajectoire cible compris dans la trajectoire de mouvement cible, dans lequel le point de trajectoire cible est un nième point de trajectoire parmi une pluralité de points de trajectoire compris dans la trajectoire de mouvement cible, $t_0$ est le moment actuel, $\Delta t$ est un pas de temps prédit, et n est un nombre entier positif supérieur ou égal à 0 ;
la cinquième formule est

$$\begin{cases} x_{t_0} = x_1 \\ y_{t_0} = y_1 \end{cases} ;$$

et

$$\begin{cases} x_{t_0+n\Delta t} = x_1 + v_{x_1}n\Delta t + \frac{1}{2}a_{x\_sample}[\text{i}](n\Delta t)^2 \\ y_{t_0+n\Delta t} = y_1 + v_{y_1}n\Delta t + \frac{1}{2}a_{y1}(n\Delta t)^2 \end{cases} ,$$

où
$a_{y1}$ est l'accélération longitudinale de l'objet mobile cible comprise dans les informations d'état cible, et $a_{x\_sample}$ [$i$] est la valeur discrète cible.

**12.** Système permettant d'estimer une route de circulation selon la revendication 8, dans lequel le premier module de détermination comprend :

un premier sous-module de détermination, configuré pour réaliser, selon une sixième formule, un traitement d'atténuation sur une valeur de probabilité cible $P_i$ correspondant au point de trajectoire cible $(x_{t_0+n\Delta t}, y_{t_0+n\Delta t})$ pour obtenir une valeur de probabilité cible $P(x_{t_0+n\Delta t}, y_{t_0+n\Delta t})$ après le traitement d'atténuation, dans lequel la sixième formule est $P(x_{t0+n\Delta t}, y_{t0+n\Delta t}) = \lambda^n * P_i$, et $\lambda$ est une valeur prédéfinie ; et
un deuxième sous-module de détermination, configuré pour déterminer que la valeur de probabilité cible correspondant au point de trajectoire cible est la valeur de probabilité cible $P(x_{t_0+n\Delta t}, y_{t_0+n\Delta t})$ obtenue après le traitement d'atténuation.

**13.** Système permettant d'estimer une route de circulation selon la revendication 8, dans lequel le premier module de détermination comprend :

un troisième sous-module de détermination, configuré pour : si le point de trajectoire cible qui satisfait une première condition prédéfinie est obtenu, obtenir une pluralité de valeurs de probabilité correspondant au point de trajectoire cible, dans lequel la première condition prédéfinie est que le point de trajectoire cible est situé dans différentes trajectoires de mouvement ; et
un quatrième sous-module de détermination, configuré pour déterminer, en tant que valeur de probabilité cible correspondant au point de trajectoire cible, une valeur maximale de valeurs de probabilité qui correspondent au point de trajectoire cible dans les différentes trajectoires de mouvement.

**14.** Système permettant d'estimer une route de circulation selon la revendication 8, dans lequel le premier module de détermination comprend :

un cinquième sous-module de détermination, configuré pour obtenir une trajectoire de mouvement passée qui a été prédite pour l'objet mobile cible à un moment passé, dans lequel le moment passé est un moment antérieur au moment actuel ;
un sixième sous-module de détermination, configuré pour : si le point de trajectoire cible qui satisfait une seconde condition prédéfinie est obtenu, obtenir une première valeur de probabilité et une seconde valeur de probabilité qui correspondent au point de trajectoire cible, dans lequel la seconde condition prédéfinie est que le point de trajectoire cible est situé à la fois dans la trajectoire de mouvement cible et la trajectoire de mouvement passée, la première valeur de probabilité est une valeur de probabilité qui correspond au point de trajectoire cible et qui est obtenue en réalisant une prédiction sur l'objet mobile cible au moment actuel, et la seconde valeur de probabilité est une valeur de probabilité qui correspond au point de trajectoire cible et qui est obtenue en réalisant une prédiction sur l'objet mobile cible au moment passé ; et
un septième sous-module de détermination, configuré pour déterminer la plus grande parmi la première valeur de probabilité et la seconde valeur de probabilité comme valeur de probabilité cible correspondant au point de trajectoire cible.

**15.** Support de stockage lisible par ordinateur, comprenant une instruction, dans lequel lorsque l'instruction est exécutée sur un processeur, le processeur est activé pour mettre en œuvre le procédé selon l'une quelconque des revendications 1 à 7.

FIG. 1

FIG. 2

A current vehicle obtains target status information of a target moving object at a current moment ⌐ 301

The current vehicle performs discretization processing on the target status information to obtain a parameter sequence ⌐ 302

The current vehicle predicts, based on a target discrete value and the target status information, a target movement track corresponding to the target discrete value ⌐ 303

The current vehicle determines, based on the target movement track, a road region in which the current vehicle travels at a future moment ⌐ 304

FIG. 3

FIG. 4

FIG. 5

FIG. 6

FIG. 7

$(x_{t_0+n\Delta t}, y_{t_0+n\Delta t})$

$(T_i, P_i)$

$(x_{t_0+\Delta t}, y_{t_0+\Delta t})$

$(x_{t_0}, y_{t_0})$

801

FIG. 8

FIG. 9

1001

A current vehicle obtains target status information of a target moving object at a current moment

1002

The current vehicle performs discretization processing on the target status information to obtain a parameter sequence

1003

The current vehicle predicts, based on a target discrete value and the target status information, a target movement track corresponding to the target discrete value

1004

The current vehicle performs, according to a sixth formula, attenuation processing on a target probability value corresponding to a target track point, to obtain a target probability value after the attenuation processing

1005

The current vehicle obtains a target track point that satisfies a regression fitting condition

1006

The current vehicle performs regression fitting based on the target track point that satisfies the regression fitting condition, to obtain a road region in which the target moving object travels at a future moment

FIG. 10

$(T_j, P_j)$

$(x_{t_0+n1\Delta t}, y_{t_0+n1\Delta t})$

1105

$(T_i, P_i)$

$(x_{t_0+n2\Delta t}, y_{t_0+n2\Delta t})$

1104

1103

1102

1101

FIG. 11

FIG. 12

FIG. 13

```
┌─────────────────────────────────────┐
│         Obtaining unit 141           │
└─────────────────────────────────────┘
                    │
┌───────────────────────────────────────────────┐
│   ┌─────────────────────────────────┐          │
│   │   First obtaining module 1421   │          │
│   └─────────────────────────────────┘          │
│                    │                            │
│   ┌─────────────────────────────────┐          │
│   │     Sampling module 1422        │          │
│   └─────────────────────────────────┘   Processing unit
│                    │                          142       │
│   ┌─────────────────────────────────┐          │
│   │  Second obtaining module 1423   │          │
│   └─────────────────────────────────┘          │
│                    │                            │
│   ┌─────────────────────────────────┐          │
│   │      Setting module 1424        │          │
│   └─────────────────────────────────┘          │
└───────────────────────────────────────────────┘
                    │
┌─────────────────────────────────────┐
│         Prediction unit 143          │
└─────────────────────────────────────┘
                    │
┌─────────────────────────────────────┐
│        Determining unit 144          │
└─────────────────────────────────────┘
```

FIG. 14

Obtaining unit 151

First obtaining module 1521

Sampling module 1522

First calculation submodule 15231

Second calculation submodule 15232

Third calculation submodule 15233

Fourth calculation submodule 15234

Second obtaining module 1523

Processing unit 152

Setting module 1524

Prediction unit 153

First determining submodule 15411

Second determining submodule 15412

Third determining submodule 15413

Fourth determining submodule 15414

Fifth determining submodule 15415

Sixth determining submodule 15416

Seventh determining submodule 15417

First determining module 1541

Determining unit 154

Second determining module 1542

Third determining module 1543

FIG. 15

**EP 3 779 922 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010063735 A1